# EUROPÄISCHE PATENTSCHRIFT

(11) **EP 1 759 952 B1**
(45) Veröffentlichungstag und Bekanntmachung des Hinweises auf die Patenterteilung: **23.12.2009**
(21) Anmeldenummer: 05028304.3
(22) Anmeldetag: 23.12.2005
(51) Int. Cl.: B61D 45/00, B60P 7/06, B60P 7/135

(54) **Einrichtung zur Sicherung von Ladegut auf einer Ladefläche eines Transportfahrzeugs, insbesondere eines Lastkraftwagens**
Aparatus for fixing the load on a transport platform of a cargo vehicle
Dispositif pour fixer le chargement sur un bac de véhicule de transport

(30) Priorität: 05.09.2005 DE 202005014016 U
(43) Veröffentlichungstag der Anmeldung: 07.03.2007
(73) Patentinhaber: Westfalia Loading Systems GmbH & Co. KG, 33442 Herzebrock-Clarholz (DE)
(72) Erfinder: Wiedenmann, Reinhold, 59555 Lippstadt (DE)
(74) Vertreter: Wagner, Carsten

(56) Entgegenhaltungen:
- US-A- 3 131 648
- US-A- 3 641 941
- US-A- 3 791 311
- US-A- 3 851 597
- US-A- 4 359 307
- US-A- 5 009 564
- US-B1- 6 537 003
- US-E- R E27 615

## Beschreibung

Die Erfindung betrifft eine Einrichtung der im Oberbegriff des Anspruchs 1 genannten Art zur Sicherung von Ladegut auf einer Ladefläche eines Transportfahrzeugs, insbesondere eines Lastkraftwagens.

Beim Transport von Ladegut mittels eines Transportfahrzeugs, beispielsweise eines Lastkraftwagens oder eines Anhängers, ist es in der Regel erforderlich, das Ladegut auf der Ladefläche zu sichern. Auf diese Weise sollen Bewegungen des Ladegutes während des Transportes verhindert oder verringert werden. Die Sicherung des Ladegutes muß hierbei so gestaltet sein, daß sich das Ladegut während des Transportvorganges nicht löst, da es anderenfalls von der Ladefläche herabfallen und Schäden oder schwere Unfälle verursachen könnte. Dies gilt insbesondere für Ladegut mit hohem Gewicht.

Es sind Einrichtungen zur Sicherung von Ladegut auf einer Ladefläche eines Transportfahrzeuges bekannt, die Spanngurte aufweisen, mittels derer das zu sichernde Ladegut auf der Ladefläche festgezurrt wird. Zum Festzurren des Ladegutes auf der Ladefläche weist diese Zurrösen oder dergleichen auf. Ein Nachteil dieser bekannten Einrichtung besteht darin, daß das Verzurren des Ladegutes auf der Ladefläche sehr viel Zeit in Anspruch nimmt und damit hohe Personalkosten verursacht. Darüber hinaus muß der Sicherungsvorgang durch Verzurren des Ladegutes mit besonderer Aufmerksamkeit ausgeführt werden, um zu verhindern, daß sich das Ladegut aufgrund einer unzureichenden Sicherung löst. Dies erhöht den Zeitaufwand und damit die Personalkosten noch weiter.

Es ist darüber hinaus bekannt, zur Ladungssicherung Luftpolsterelemente zu verwenden, die zum Ausfüllen eines zwischen dem Ladegut und einer Wandung eines Transportfahrzeugs verbleibenden Raumes dienen. Auch bei dieser bekannten Einrichtung ist nachteilig, daß die Sicherung des Ladegutes sehr zeitaufwendig ist und damit hohe Personalkosten verursacht. Ein weiterer Nachteil besteht darin, daß die beispielsweise mit Luft befüllten Polsterelemente zum Entfernen der Sicherung perforiert oder zerschnitten werden, damit die Luft entweichen kann. Die bekannten Polsterelemente können also nicht wiederverwendet werden, so daß große Mengen an Müll anfallen, die die Umwelt belasten.

Durch DE 198 52 476 A1 ist eine Einrichtung der betreffenden Art zur Sicherung von Ladegut auf einer Ladefläche eines Transportfahrzeugs, insbesondere eines Lastkraftwagens bekannt, die eine Tragstruktur aufweist, an der wenigstens ein Sicherungselement angeordnet ist, das eine flexible, mit einem Füllmedium befüllbare Hülle aufweist und über eine Befüllöffnung zerstörungsfrei entleerbar und wiederbefüllbar ist.

Ähnliche Einrichtungen sind auch durch DE 1 430 632 A, US 6 537 003 B1 und Wo 96/01194 A1 bekannt.

Durch US-A-3 791 311 ist ein pneumatisches Sicherungssystem für Transportfahrzeuge bekannt, das ein entlang der Längsrichtung des Fahrzeuges verfahrbares Eingriffselement aufweist. Das Eingriffselement stützt sich über eine aufblasbare Hülle an einer ortsfesten Wandung des Transportfahrzeugs ab und ist beim Aufblasen der Hülle in Längsrichtung des Transportfahrzeugs verfahrbar.

Der Erfindung liegt die Aufgabe zugrunde, eine Einrichtung der im Oberbegriff des Anspruchs 1 genannten Art zur Sicherung von Ladegut auf einer Ladefläche eines Transportfahrzeugs, insbesonsere eines Lastkraftwagens anzugeben, bei der die Ladungssicherung weiter verbessert ist.

Diese Aufgabe wird durch die im Anspruch 1 angegebene Lehre gelöst.

Zur Ladungssicherung weist die erfindungsgemäße Einrichtung wenigstens ein Sicherungselement auf, das eine flexible, mit einem Füllmedium befüllbare Hülle aufweist und an einer Tragstruktur angeordnet ist. Erfindungsgemäß ist das Sicherungselement über eine Befüllöffnung zerstörungsfrei entleerbar und wiederbefüllbar.

Zur Sicherung von Ladung mittels einer erfindungsgemäßen Einrichtung wird das Sicherungselement oder werden die Sicherungselemente mit einem Füllmedium befüllt, so daß sie im befüllten Zustand einen zwischen der Ladung und der Tragstruktur bzw. einer seitlichen Wandung der Ladefläche verbleibenden freien Raum einnehmen und auf diese Weise während des Transportes Bewegungen des Ladeguts verhindern oder verringern.

Beispielsweise und insbesondere kann das Sicherungselement oder können die Sicherungselemente luftsackartig ausgebildet und durch Befüllen mit einem gasförmigen Füllmedium, insbesondere Luft, aufblasbar sein. Beim Aufblasen eines Sicherungselementes nimmt dieses dann den zwischen dem Ladegut und der Tragstruktur verbleibenden Raum ein, wobei es sich aufgrund seiner flexiblen Hülle eng an die Kontur des Ladegutes anpaßt. Auf diese Weise sind Bewegungen des Ladegutes weitestgehend verhindert, so daß eine wirksame Ladungssicherung erzielt ist. Das Aufblasen des Sicherungselementes oder der Sicherungselemente kann hierbei schnell erfolgen und ggf. automatisch gesteuert werden, so daß der Ladungssicherungsvorgang wesentlich verkürzt ist. Dies spart Zeit und Personalkosten. Soll das Ladegut nach Beendigung des Transportes abgeladen und zuvor entsichert werden, so wird das Sicherungselement oder werden die Sicherungselemente entleert, so daß ihre Hüllen kollabieren. Auch dieser Vorgang ist besonders schnell und einfach ausführbar und kann ggf. ebenfalls automatisch ablaufen. Nach dem Entleeren des Sicherungselementes oder der Sicherungselemente kann das Ladegut dann von der Ladefläche entnommen werden. Falls gewünscht, kann unmittelbar daran anschließend ein neuer Beladevorgang begonnen werden.

Erfindungsgemäß ist ein in Längsrichtung der Ladefläche hin und her verfahrbares Trennelement zur Trennung der Ladefläche in einen genutzten Teil und eine ungenutzten Teil vorgesehen, wobei dem Trennelement zum Verfahren desselben in Längsrichtung der Ladefläche wenigstens eine motorische Antriebseinrichtung zugeordnet ist. Wird bei einem Transport von Ladegut nicht der gesamte Laderaum benötigt, so wird die Verfahrposition des Trennelementes in Längsrichtung der Ladefläche so gewählt, daß das Ladegut den dann abgetrennten genutzten Teil der Ladefläche in deren Längsrichtung im wesentlichen vollständig einnimmt. Auf diese Weise sind auch in einem teilbeladenen Zustand des Transportfahrzeugs unerwünschte Längsbewegungen des Ladegutes in Richtung auf eine Stirnwand des Transportfahrzeugs vermieden. Auf diese Weise ist die Ladungssicherung gegenüber bekannten Einrichtungen wesentlich verbessert.

Der Beladevorgang, der Ladungssicherungsvorgang durch Verfahren des Trennelements und durch Befüllen des Sicherungselementes oder der Sicherungselemente, der Entsicherungsvorgang durch Entleeren des Sicherungselementes oder der Sicherungselemente sowie der Entladevorgang können teilautomatisch oder vollautomatisch ablaufen. Dies ermöglicht eine besonders hohe Effizienz der Be- und Entladevorgänge.

Form, Größe, Anzahl und Aufbau des Sicherungselementes bzw. der Sicherungselemente sind entsprechend den jeweiligen Anforderungen in weiten Grenzen wählbar.

Die erfindungsgemäße Einrichtung ist zur Sicherung von Ladegut auf beliebigen selbstfahrenden oder fremdangetriebenen Transportfahrzeugen geeignet, beispielsweise Straßenfahrzeugen, Schienenfahrzeugen oder Luftfahrzeugen. Darüber hinaus ist die erfindungsgemäße Einrichtung auch zur Sicherung von Ladung auf Schiffen geeignet, bei denen die Betriebssicherheit u. U. entscheidend davon abhängt, daß eine vorgegebene Schwerpunktlage nicht durch eine unerwünschte Verschiebung der Ladung verändert wird.

Erfährt bei der Benutzung der erfindungsgemäßen Einrichtung das Ladegut eine Querbeschleunigung, so drückt es gegen das befüllte Sicherungselement oder eines der befüllten Sicherungselemente. Die hierbei auf das jeweilige Sicherungselement wirkende Kraft wird von diesem in die Tragstruktur eingeleitet. Dadurch, daß sich das Sicherungselement oder die Sicherungselemente beim Befüllen der Hülle an die äußere Kontur des Ladegutes anpaßt, ist eine Verschiebung des Ladegutes im wesentlichen vermieden. Erfährt das Ladegut eine Beschleunigung in Längsrichtung der Ladefläche, beispielsweise bei einem Bremsvorgang des Transportfahrzeugs, so ist durch die Trennwand, die sich in der entsprechend dem Beladungszustand des Transportfahrzeugs gewählten Verfahrposition in unmittelbarer Nähe des in Fahrtrichtung vorderen Endes des Ladegutes befindet, ein Verrutschen des Ladegutes in Längsrichtung der Ladefläche vermieden.

Das Trennelement kann erfindungsgemäß auf beliebige geeignete Weise ausgebildet sein. Um das Trennelement besonders stabil zu gestalten, sieht eine vorteilhafte Weiterbildung vor, daß das Trennelement als Trennwand ausgebildet ist.

Eine vorteilhafte Weiterbildung der erfindungsgemäßen Lehre sieht vor, daß an der Tragstruktur wenigstens zwei quer zur Längsrichtung der Ladefläche zueinander beabstandete Sicherungselemente angeordnet sind. Bei dieser Ausführungsform stützt sich das Ladegut im befüllten Zustand der Sicherungselemente beiderseits der Ladefläche an den Sicherungselementen ab, die sich ihrerseits an der Tragstruktur abstützen. Unter der Längsrichtung der Ladefläche wird erfindungsgemäß die Richtung verstanden, in der die Ladefläche die größte Ausdehnung hat. Die Längsrichtung der Ladefläche wird beispielsweise bei einem Lastkraftwagen oder einem Anhänger in der Regel parallel zur Fahrtrichtung sein.

Eine andere vorteilhafte Weiterbildung der erfindungsgemäßen Lehre sieht vor, daß an der Tragstruktur wenigstens zwei in Längsrichtung der Ladefläche zueinander beabstandete Sicherungselemente angeordnet sind. Bei dieser Ausführungsform wird eine in Längsrichtung der Ladefläche verlaufende Sicherung durch eine Mehrzahl von Sicherungselementen gebildet, die die gleiche oder eine unterschiedliche Form und Größe haben können.

Eine Weiterbildung der vorgenannten Ausführungsform sieht vor, daß quer zur Längsrichtung der Ladefläche gesehen auf jeder Seite an der Tragstruktur wenigstens zwei in Längsrichtung der Ladefläche zueinander beabstandete Sicherungselemente angeordnet sind. Bei dieser Ausführungsform sind die Sicherungselemente einerseits auf beiden Seiten der Ladefläche und andererseits in Längsrichtung der Ladefläche aufeinanderfolgend angeordnet. Auf diese Weise ergibt sich eine besonders wirksame Sicherung des Ladegutes, weil dieses sowohl bei einer Beschleunigung quer zur Längsrichtung der Ladefläche als auch bei einer Beschleunigung in Längsrichtung der Ladefläche stets in Kontakt mit einem der Sicherungselemente bleibt und damit eine Verschiebung des Ladegutes besonders zuverlässig vermieden ist.

Um die Ladungssicherung weiter zu verbessern, sieht eine andere vorteilhafte Weiterbildung der erfindungsgemäßen Lehre vor, daß an der Tragstruktur wenigstens zwei in Vertikalrichtung zueinander beabstandete Sicherungselemente angeordnet sind.

Grundsätzlich ist es erfindungsgemäß ausreichend, wenn auf einer Seite oder beiden Seiten der Ladefläche wenigstens ein Sicherungselement angeordnet ist. Um die Sicherung des Ladegutes gegen Bewegungen in Längsrichtung der Ladefläche weiter zu verbessern, sieht eine vorteilhafte Weiterbildung der erfindungsgemäßen Lehre vor, daß dem in Längsrichtung der Ladefläche vorderen und/oder dem in Längsrichtung der Ladefläche hinteren Ende der Ladefläche wenigstens ein Sicherungselement zugeordnet ist. Bei dieser Ausführungsform kann das Sicherungselement einen zwischen dem in Fahrtrichtung vorderen Ende des Ladegutes und einer Stirnwand des Transportfahrzeuges und/oder einen zwischen dem in Längsrichtung der Ladefläche hinteren Ende des Ladegutes und einer hinteren Wandung des Transportfahrzeuges verbleibenden Raum einnehmen, so daß Bewegungen des Ladegutes in Längsrichtung der Ladefläche besonders zuverlässig vermieden sind.

Grundsätzlich ist es erfindungsgemäß ausreichend, wenn das Sicherungselement oder wenigstens eines der Sicherungselemente lose an der Tragstruktur angeordnet ist. Um unerwünschte Verschiebungen eines Sicherungselementes relativ zu der Tragstruktur zu vermeiden, sieht eine vorteilhafte Weiterbildung der erfindungsgemäßen Lehre vor, daß das Sicherungselement oder wenigstens eines der Sicherungselemente an der Tragstruktur befestigt ist.

Der Aufbau der Tragstruktur ist entsprechend den jeweiligen Anforderungen in weiten Grenzen wählbar. Um in Längsrichtung der Ladung bei Querbeschleunigungen eine gleichmäßige Abstützung der Sicherungselemente und damit der Ladung zu erzielen, sieht eine vorteilhafte Ausführungsform vor, daß die Tragstruktur wenigstens zwei in Längsrichtung der Ladefläche zueinander beabstandete Träger aufweist. Ein weiterer Vorteil dieser Ausführungsform besteht darin, daß die Einleitung von Kräften, die die Träger aufnehmen, in einen Boden des Transportfahrzeuges noch gleichmäßiger gestaltet ist.

Bei der vorgenannten Ausführungsform ist der Aufbau der Träger entsprechend den jeweiligen Forderungen in weiten Grenzen wählbar. Um die Träger einerseits einfach aufzubauen und gleichzeitig eine hohe Stabilität zu erzielen, sieht eine Weiterbildung der Ausführungsform mit den Trägern vor, daß diese beiderseits der Ladefläche jeweils einen Schenkel aufweisen, wobei die der Ladefläche zugewandten Enden der Schenkel mit der Ladefläche verbunden sind und die der Ladefläche abgewandten Enden der Schenkel unmittelbar oder über wenigstens einen Querschenkel miteinander verbunden sind.

Um die Verbindung der der Ladefläche zugewandten Enden der Schenkel mit der Ladefläche und damit die Krafteinleitung in die Ladefläche weiter zu verbessern, sieht eine vorteilhafte Weiterbildung der Ausführungsform mit den Schenkeln vor, daß die der Ladefläche zugewandten Enden der Schenkel innig mit der Ladefläche verbunden sind. Eine innige Verbindung der Enden der Schenkel mit einer Ladefläche kann beispielsweise durch Einlaminieren oder dergleichen erzielt werden.

Grundsätzlich ist es erfindungsgemäß ausreichend, wenn die Hülle des Sicherungselementes oder wenigstens eines der Sicherungselemente im wesentlichen undehnbar ausgebildet ist.

Um eine Anpassung des befüllten Sicherungselementes an die Kontur des Ladegutes und ein Ausfüllen eines zwischen dem Ladegut und der Tragstruktur verbleibenden Raumes durch das Sicherungselement weiter zu verbessern, sieht eine andere zweckmäßige Weiterbildung vor, daß die Hülle des Sicherungselementes oder wenigstens eines der Sicherungselemente wenigstens abschnittsweise aus einem elastisch verformbaren, insbesondere dehnbaren Material, insbesondere wenigstens einem Elastomer, besteht.

Erfindungsgemäß ist es grundsätzlich ausreichend, wenn die Hülle des Sicherungselementes oder wenigstens eines der Sicherungselemente ausschließlich aus Kunststoff besteht. Um eine Beschädigung von Sicherungselementen insbesondere an spitzem oder scharfkantigem Ladegut zu vermeiden, sieht eine vorteilhafte Weiterbildung der erfindungsgemäßen Lehre vor, daß die Hülle des Sicherungselementes oder wenigstens eines der Sicherungselemente wenigstens abschnittsweise mit einer Verstärkungsschicht oder Verstärkungseinlage, insbesondere aus textilem Material, versehen ist. Durch die Verstärkungseinlage oder Verstärkungsschicht ist verhindert, daß die Hülle im befüllten, insbesondere aufgeblasenen Zustand verletzt oder sogar perforiert wird.

Eine andere zweckmäßige Weiterbildung der erfindungsgemäßen Lehre sieht vor, daß wenigstens zwei Sicherungselemente befüllungstechnisch parallel geschaltet sind. Bei dieser Ausführungsform kann beispielsweise die Ladungssicherung bei einer unerwünschten Entleerung eines Sicherungselementes durch das hierzu parallel geschaltete Sicherungselement aufrechterhalten werden, insbesondere dann, wenn die parallel geschalteten Sicherungselemente in Vertikalrichtung übereinander angeordnet sind.

Eine andere vorteilhafte Weiterbildung der erfindungsgemäßen Lehre sieht vor, daß wenigstens zwei Sicherungselemente befüllungstechnisch in Reihe geschaltet sind. Erfindungsgemäß sind hierbei entsprechend den jeweiligen Anforderungen beliebige Kombinationen aus parallel und/oder in Reihe geschalteten Sicherungselementen möglich.

Erfindungsgemäß kann es grundsätzlich ausreichend sein, wenn die erfindungsgemäß vorgesehenen Sicherungselemente Verschiebungen des Ladegutes in einem gewissen Maße zulassen. Um Verschiebungen des Ladegutes quer zur Längsrichtung der Ladefläche zu vermeiden, sieht eine vorteilhafte Weiterbildung vor, daß das Sicherungselement oder die Sicherungselemente im befüllten, insbesondere aufgeblasenen Zustand, einen quer zur Längsrichtung der Ladefläche zwischen dem Ladegut und der Tragstruktur bestehenden Raum im wesentlichen vollständig einnehmen, derart, daß eine Verschiebung des Ladegutes quer zur Längsrichtung der Ladefläche im wesentlichen vermieden ist.

Eine andere zweckmäßige Weiterbildung der erfindungsgemäßen Lehre sieht Befüllmittel zur vorzugsweise automatischen Befüllung des Sicherungselementes oder wenigstens eines der Sicherungselemente mit dem Füllmedium und/oder zur vorzugsweise automatischen Entleerung des Sicherungselementes oder wenigstens eines der Sicherungselemente vor. Arbeiten die Befüllmittel automatisch, so ist sowohl der Ladungssicherungsvorgang durch Befüllen der Sicherungselemente mit dem Füllmedium als auch der Ladungsentsicherungsvorgang durch Entleeren der Sicherungselemente automatisierbar.

Eine vorteilhafte Weiterbildung der vorgenannten Ausführungsform sieht vor, daß die Befüllmittel das Sicherungselement oder wenigstens eines der Sicherungselemente mit einem vorgegebenen Befülldruck befüllen.

Um die Sicherheit der erfindungsgemäßen Einrichtung weiter zu erhöhen, sieht eine andere zweckmäßige Weiterbildung vor, daß dem Sicherungselement oder wenigstens einem der Sicherungselemente Überwachungsmittel zur Überwachung des Befülldruckes des jeweiligen Sicherungselementes zugeordnet sind. Bei dieser Ausführungsform kann beispielsweise wenigstens ein Druckwächter verwendet werden, um zu überwachen, ob in den Sicherungselementen der gewünschte Befülldruck herrscht und somit eine ausreichende Sicherung der Ladung erzielt ist oder ob dieser Befülldruck sich verringert hat und damit ggf. keine ausreichende Ladungssicherung mehr besteht.

Die Einstellung des Befülldruckes kann erfindungsgemäß grundsätzlich von Hand erfolgen. Um das Befüllen bzw. Entleeren der Sicherungselemente zu automatisieren und damit zu erleichtern, sieht eine vorteilhafte Weiterbildung der Erfindung vor, daß den Sicherungselementen oder wenigstens einem der Sicherungselemente Steuerungsmittel zur Steuerung und/oder Regelung des Befülldruckes des jeweiligen Sicherungselementes zugeordnet sind.

Eine andere vorteilhafte Weiterbildung der erfindungsgemäßen Lehre sieht Anzeigemittel zum Anzeigen des Befülldruckes, insbesondere eines Unterschreitens eines vorgegebenen minimalen Befülldruckes, wenigstens eines Sicherungselementes vor. Auf diese Weise sind Fehlfunktionen der erfindungsgemäßen Einrichtung, beispielsweise aufgrund eines Druckabfalles in den Sicherungselementen, für eine Bedienperson, beispielsweise einen Fahrer eines Lastkraftwagens, frühzeitig erkennbar. Der Fahrer kann beispielsweise beim Unterschreiten des vorgegebenen minimalen Befülldruckes die Fahrt unterbrechen oder abbrechen, wenn eine ausreichende Sicherung des Ladegutes nicht mehr gewährleistet ist.

Um eine Beladung der Ladefläche mit Ladegut zu erleichtern, sieht eine andere vorteilhafte Weiterbildung der erfindungsgemäßen Lehre vor, daß der Ladefläche wenigstens ein in Längsrichtung der Ladefläche fördernder Stetigförderer zum Fördern von Ladung auf die Ladefläche zugeordnet ist.

Um die Bauhöhe der erfindungsgemäßen Einrichtung zu verringern und damit die Ladekapazität des Transportfahrzeuges zu erhöhen, sieht eine andere vorteilhafte Weiterbildung der Erfindung vor, daß die Ladefläche wenigstens teilweise durch den Stetigförderer gebildet ist.

Bei den vorgenannten Ausführungsformen kann ein beliebiger Stetigförderer verwendet werden. Um einen einfachen Aufbau mit hoher Förderleistung zu erzielen, sieht insoweit eine Weiterbildung der erfindungsgemäßen Lehre vor, daß der Stetigförderer wenigstens ein Förderband aufweist. Unter einem Förderband wird erfindungsgemäß ein Förderer mit einem flexiblen Fördermittel verstanden, unabhängig davon, ob es sich beispielsweise um ein Band aus Kunststoff oder einem textilen Material oder aus gelenkig miteinander verbundenen Platten oder Kettengliedern handelt.

Erfindungsgemäß ist es bei der vorgenannten Ausführungsform möglich, daß das Förderband als umlaufendes Endlosband ausgebildet ist. Nachteilig ist hierbei jedoch, daß die Umlenkung des Förderbandes in Vertikalrichtung einen erheblichen Raumbedarf erfordert, durch den die Höhe des Laderaumes und damit die Ladekapazität des Transportfahrzeuges verringert wird. Zur Vermeidung dieses Nachteiles sieht eine andere Weiterbildung der Erfindung vor, daß dem Förderband wenigstens eine Aufwickelvorrichtung zum Aufwickeln des Förderbandes zugeordnet ist. Auf diese Weise kann ein fördernder Teil des Förderbandes in einer Ebene geführt werden, so daß sich in Vertikalrichtung nur ein äußerst geringer Raumbedarf ergibt. Die Aufwickelvorrichtung kann hierbei so positioniert werden, daß sie den zur Verfügung stehenden Laderaum nicht verringert.

Um einen einfachen und robusten Aufbau der Aufwikkelvorrichtung zu erzielen, sieht eine vorteilhafte Weiterbildung vor, daß die Aufwickeltrommel eine vorzugsweise motorisch drehantreibbare Wickeltrommel aufweist.

Zweckmäßigerweise ist dem Förderband zum Abwickeln desselben eine Abwickelvorrichtung zugeordnet.

Bei der vorgenannten Ausführungsform kann die Abwickelvorrichtung, ähnlich wie die Aufwickelvorrichtung, eine drehantreibbare Wickeltrommel aufweisen. Um die Abwickelvorrichtung besonders einfach und damit kostengünstig zu gestalten, sieht eine andere vorteilhafte Weiterbildung der erfindungsgemäßen Lehre vor, daß die Abwickelvorrichtung ein in Längsrichtung der Ladefläche bewegliches Antriebselement aufweist, das mit einem Ende des Förderbandes zum Abwickeln desselben verbunden ist.

Bei der vorgenannten Ausführungsform kann die Abwickelvorrichtung zweckmäßigerweise einen Seil- oder Kettenzug aufweisen, dessen Seil bzw. Kette das Antriebselement bildet, wie dies eine andere Weiterbildung der erfindungsgemäßen Lehre vorsieht. Auf diese Weise ist die Abwickelvorrichtung besonders einfach und robust gestaltet.

Um bei in Längsrichtung der Ladefläche wirkenden Kräften eine unerwünschte Verschiebung des Trennelementes zu verhindern, sieht eine andere vorteilhafte Weiterbildung der erfindungsgemäßen Lehre vor, daß das Trennelement mittels einer Verriegelungsvorrichtung in seiner jeweiligen Verfahrposition verriegelbar ist. Hierbei ist die Verriegelungsvorrichtung vorzugsweise als elektromechanische Verriegelungsvorrichtung ausgebildet und somit einfach, kostengünstig und robust gestaltet.

Grundsätzlich kann das Trennelement unabhängig von dem Stetigförderer verfahrbar sein. Um den Aufbau weiter zu vereinfachen und den Beladevorgang weiter zu automatisieren, sieht eine andere vorteilhafte Weiterbildung der erfindungsgemäßen Lehre vor, daß das Trennelement derart an den Stetigförderer gekoppelt ist, daß es im wesentlichen synchron zu einer Förderbewegung des Stetigförderers verfährt. Bei der vorgenannten Ausführungsform kann das Trennelement vorzugsweise an einem beweglichen Teil des Stetigförderers befestigt sein, wie dies eine andere Weiterbildung vorsieht.

Bei den Ausführungsformen mit dem Trennelement kann diesem vorzugsweise wenigstens ein Sicherungselement zugeordnet, insbesondere an diesem angeordnet sein, wie dies eine andere zweckmäßige Weiterbildung vorsieht. Beispielsweise und insbesondere kann an dem der Ladefläche zugewandten Seite des Trennelementes ein luftsackartiges Sicherungselement angeordnet sein, das im befüllten, insbesondere aufgeblasenen Zustand den zwischen dem Trennelement und dem Ladegut verbleibenden Raum einnimmt.

Ein mit einer erfindungsgemäßen Einrichtung versehenes Transportfahrzeug ist im Anspruch 36 angegeben.

Die Erfindung wird nachfolgend anhand der beigefügten stark schematisierten Zeichnung näher erläutert, in der ein Ausführungsbeispiel eines erfindungsgemäßen Transportfahrzeuges mit einer erfindungsgemäßen Einrichtung dargestellt ist. Dabei bilden alle beanspruchten, beschriebenen oder in der Zeichnung dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Es zeigt:
- Fig. 1: eine Seitenansicht eines Ausführungsbeispieles eines erfindungsgemäßen Transportfahrzeugs mit einer erfindungsgemäßen Einrichtung zur Sicherung von Ladegut auf einer Ladefläche des Transportfahrzeugs,
- Fig. 2: eine Ansicht von oben auf das Transportfahrzeug gemäß Fig. 1, wobei der Laderaum geschnitten dargestellt ist,
- Fig. 3: eine Ansicht von hinten auf das Transportfahrzeug gemäß Fig. 1, wobei die Sicherungselemente im entleerten Zustand dargestellt sind,
- Fig. 4: in gleicher Darstellung wie Fig. 3 das Transportfahrzeug gemäß Fig. 1, wobei die Sicherungselemente im befüllten Zustand dargestellt sind,
- Fig. 5: ein pneumatisches Blockschaltbild eines Ausführungsbeispieles einer erfindungsgemäßen Einrichtung,
- Fig. 6: ein Detail der erfindungsgemäßen Einrichtung im Bereich einer Verriegelungsvorrichtung in Schnittdarstellung,
- Fig. 7: in gleicher Darstellung wie Fig. 2 das Transportfahrzeug gemäß Fig. 1 im voll beladenen Zustand,
- Fig. 8: eine Ansicht von hinten auf das Transportfahrzeug gemäß Fig. 7,
- Fig. 9: in gleicher Darstellung wie Fig. 7 das Transportfahrzeug gemäß Fig. 1 im voll beladenen Zustand mit einer anderen Ladung,
- Fig. 10: in gleicher Darstellung wie Fig. 9 das Transportfahrzeug gemäß Fig. 9 im teilbeladenen Zustand,
- Fig. 11: in ähnlicher Darstellung wie Fig. 1 eine weitere Seitenansicht des Transportfahrzeugs gemäß Fig. 1,
- Fig. 12: eine Ansicht einer erfindungsgemäßen Trennwand,
- Fig. 13: eine Seitenansicht der Trennwand gemäß Fig. 12,
- Fig. 14: eine Ansicht von oben der Trennwand gemäß Fig. 12,
- Fig. 15: in teilweise geschnittener Seitenansicht eine Abwickelvorrichtung zum Abwickeln eines Förderbandes,
- Fig. 16: in gleicher Darstellung wie Fig. 15 eine Aufwickelvorrichtung zum Aufwickeln des Förderbandes und
- Fig. 17: in größerem Maßstab eine Einzelheit aus den Fig. 15 und 16 im Bereich einer Klemmvorrichtung.

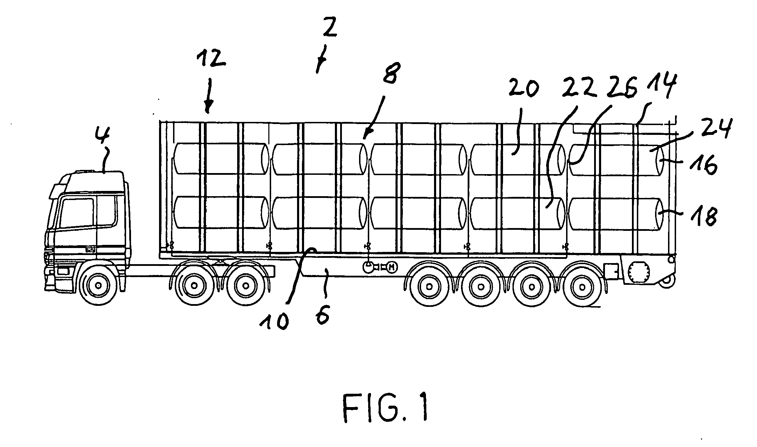

In Fig. 1 ist eine Seitenansicht eines erfindungsgemäßen Transportfahrzeugs 2 in Form eines Lastkraftwagens dargestellt, der eine Zugmaschine 4 und einen Auflieger 6 aufweist. Das erfindungsgemäße Transportfahrzeug 2 ist mit einem Ausführungsbeispiel einer erfindungsgemäßen Einrichtung 8 zur Sicherung von in Fig. 1 nicht dargestelltem Ladegut auf einer Ladefläche 10 des Transportfahrzeugs versehen, wobei die Ladefläche 10 bei diesem Ausführungsbeispiel auf dem Auflieger 6 gebildet ist.

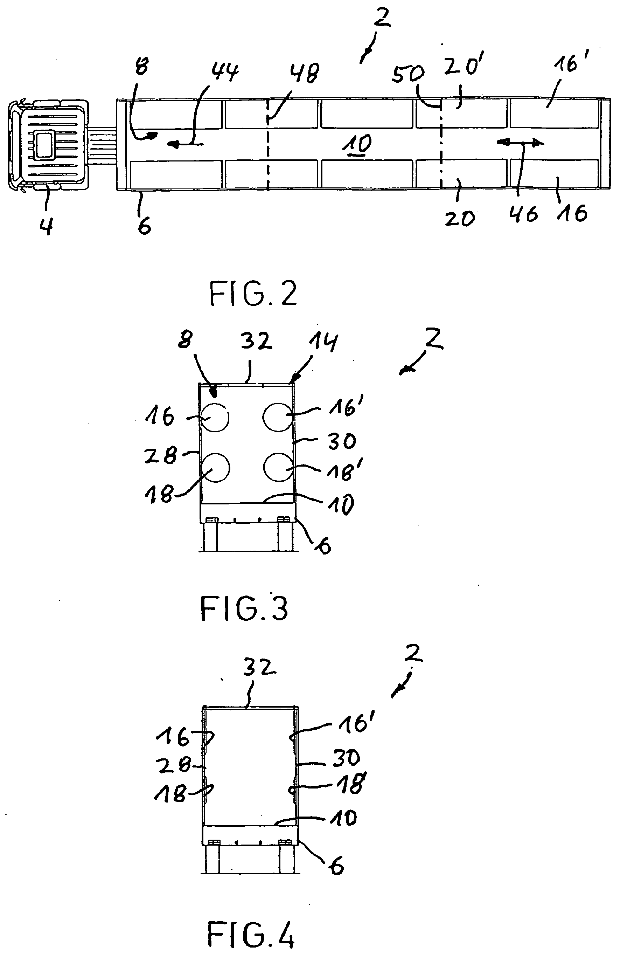

Die erfindungsgemäße Einrichtung 8 weist eine Tragstruktur 12 auf, die bei diesem Ausführungsbeispiel eine Mehrzahl von in Längsrichtung der Ladefläche 10 aufeinanderfolgenden, zueinander beabstandeten Trägern gebildet ist, von denen in Fig. 1 lediglich ein Träger mit dem Bezugszeichen 14 versehen ist. Die Tragstruktur 12 wird weiter unten anhand von Fig. 3 näher erläutert.

Die erfindungsgemäße Einrichtung 8 weist bei diesem Ausführungsbeispiel eine Mehrzahl von Sicherungselementen zur Sicherung von Ladegut auf der Ladefläche 10 des Transportfahrzeugs 2 auf, von denen in Fig. 1 lediglich vier Sicherungselemente mit den Bezugszeichen 16, 18, 20, 22 versehen sind. Nachfolgend wird der Aufbau des Sicherungselementes 16 näher erläutert; die übrigen Sicherungselemente sind entsprechend aufgebaut.

Das Sicherungselement 16 weist eine flexible, mit einem gasförmigen Füllmedium, bei diesem Ausführungsbeispiel Luft, befüllbare, im wesentlichen gasdichte Hülle 24 auf und ist über eine Befüllöffnung 26 mit dem Füllmedium befüllbar, zerstörungsfrei entleerbar und wiederbefüllbar. Die Hülle 24 besteht bei diesem Ausführungsbeispiel aus einem Kunststoff und ist mit einer Verstärkungseinlage aus einem textilen Material versehen, um eine Beschädigung der Hülle 24 an scharfkantigem Ladegut zu verhindern. Bei diesem Ausführungsbeispiel ist das Sicherungselement 16 luftsackartig ausgebildet und wird beim Befüllen mit Druckluft aufgeblasen. Zum Befüllen des Sicherungselementes 16 und der weiteren Sicherungselemente sind Befüllmittel vorgesehen, die weiter unten näher erläutert werden.

Wie aus Fig. 1 ersichtlich ist, ist bei diesem Ausführungsbeispiel an der Tragstruktur eine Mehrzahl von in Längsrichtung der Ladefläche zueinander beabstandeten Sicherungselementen 16, 20 bzw. 18, 22 vorgesehen, wobei die Sicherungselemente 16, 18 bzw. 20, 22 paarweise in Vertikalrichtung übereinander angeordnet sind. Die in Fig. 1 erkennbaren Sicherungselemente 16, 18, 20, 22 sind bei diesem Ausführungsbeispiel der in Fahrtrichtung des Transportfahrzeugs 4 gesehen linken Seite der Ladefläche 10 zugeordnet.

Wie aus Fig. 2 ersichtlich ist, sind in hierzu entsprechender Weise der in Fahrtrichtung gesehen rechten Seite der Ladefläche 10 ebenfalls Sicherungselemente 16, 20' zugeordnet und an der Tragstruktur 12 angeordnet, so daß erfindungsgemäß bei diesem Ausführungsbeispiel an der Tragstruktur 12 eine Mehrzahl von quer zur Längsrichtung der Ladefläche 10 zueinander beabstandeten Sicherungselementen 16, 16' bzw. 20, 20' angeordnet ist.

Das Sicherungselement 16 sowie die übrigen Sicherungselemente sind bei diesem Ausführungsbeispiel an der Tragstruktur 12 befestigt, so daß sie in Längsrichtung der Ladefläche 10, quer zur Längsrichtung der Ladefläche 10 sowie in Vertikalrichtung an der Tragstruktur 12 fixiert sind. Aus Gründen der Übersichtlichkeit sind in Fig. 2 die Träger 14 der Tragstruktur 12 weggelassen. Fig. 1 und Fig. 2 stellen das Sicherungselement 16 und die übrigen Sicherungselemente im befüllten, nämlich aufgeblasenen Zustand dar.

In Fig. 3, die eine Ansicht von hinten auf das Transportfahrzeug 2 zeigt, sind die Sicherungselemente 16, 18, 16', 18' wiederum im aufgeblasenen Zustand dargestellt, wobei ersichtlich ist, daß die Sicherungselemente 16, 18, 16', 18' bei diesem Ausführungsbeispiel im wesentlichen zylindrisch ausgebildet sind.

Nachfolgend wird der Aufbau des Trägers 14 näher erläutert; die übrigen Träger der Tragstruktur 12 sind entsprechend aufgebaut. Wie aus Fig. 3 ersichtlich ist, ist der Träger 14 bei diesem Ausführungsbeispiel im wesentlichen U-förmig ausgebildet und weist beiderseits der Ladefläche 10 jeweils einen Schenkel 28, 30 auf, wobei sich die Schenkel 28, 30 bei diesem Ausführungsbeispiel im wesentlichen in Vertikalrichtung erstrekken. Die der Ladefläche abgewandten Enden der Schenkel 28, 30 sind bei diesem Ausführungsbeispiel über einen Querschenkel 32 verbunden, während die der Ladefläche 10 zugewandten Enden der Schenkel 28, 30 innig mit der Ladefläche 10 verbunden sind, beispielsweise durch Einlaminieren in die Ladefläche 10. Im Bereich der Verbindung der Schenkel 28, 30 mit dem Querschenkel 32 können ggf. Verstärkungselemente, beispielsweise Winkel angeordnet sein, um den Träger 14 in seiner Form zu stabilisieren und im Falle einer Belastung übermäßige Verwindungen zu vermeiden.

Fig. 4 zeigt die Sicherungselemente 16, 18, 16', 18' im entleerten Zustand, in dem ihre Hülle, beispielsweise die Hülle 24 des Sicherungselementes 16, kollabiert ist und sich flach an den Träger 14 anlegt.

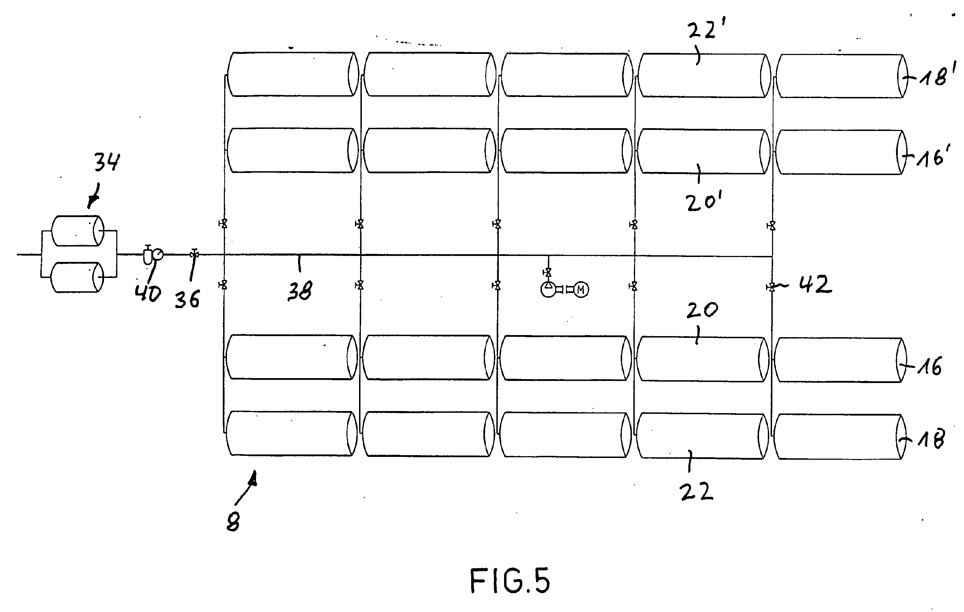

Fig. 5 stellt ein pneumatisches Blockschaltbild der erfindungsgemäßen Einrichtung 8 dar. Die erfindungsgemäße Einrichtung 8 weist bei diesem Ausführungsbeispiel eine Druckspeicheranordnung 34 zum Befüllen des Sicherungselementes 16 sowie der weiteren Sicherungselemente mit Druckluft auf, die über ein Absperrventil 36 und Druckluftleitungen, von denen in Fig. 5 lediglich eine Druckluftleitung mit dem Bezugszeichen 38 versehen ist, mit dem Sicherungselement 16 und den weiteren Sicherungselementen in Verbindung steht. Zwischen der Druckspeicheranordnung 34 und dem Absperrventil 36 ist ein Druckminderer 40 angeordnet, der beispielsweise einen von der Druckspeicheranordnung 34 gelieferten Druck von 8 bar auf einen Befülldruck von beispielsweise 0,1 bar reduziert.

Wie aus Fig. 5 ersichtlich ist, sind die Sicherungselemente 16, 18, 16', 18', 20, 22, 20', 22' paarweise parallelgeschaltet, wobei jedem Paar von Sicherungselementen 16, 18 bzw 16', 18' bzw. 20, 22 bzw. 20', 22' jeweils ein Absperrventil zugeordnet ist. In Fig. 5 ist lediglich ein dem Paar von Sicherungselementen 16, 18 zugeordnetes Absperrventil mit dem Bezugszeichen 42 versehen. Durch Öffnen bzw. Schließen des Absperrventils 42 sind die einzelnen Paare von Sicherungselementen 16, 18 bzw. 16', 18' bzw. 20, 22 bzw. 20', 22' mit der Druckspeicheranordnung 34 verbindbar.

Erfindungsgemäß sind bei diesem Ausführungsbeispiel ferner Überwachungsmittel zur Überwachung des Befülldruckes der Sicherungselemente vorgesehen. Hierbei kann erfindungsgemäß jedem Sicherungselement 16 bzw. jedem Paar von Sicherungselementen 16, 18 eine separate Überwachungseinrichtung zugeordnet sein. Es können jedoch auch sämtlichen Sicherungselementen eine gemeinsame Überwachungseinrichtung zur Überwachung des Befülldruckes zugeordnet sein.

Die erfindungsgemäße Einrichtung 8 weist bei diesem Ausführungsbeispiel ferner Anzeigemittel zum Anzeigen des Befülldruckes, insbesondere eines Unterschreitens eines vorgegebenen minimalen Befülldruckes der Sicherungselemente auf, wobei die Anzeigemittel mit den Überwachungsmitteln in Verbindung stehen. Hierbei zeigen die Anzeigemittel stets den in den Sicherungselementen herrschenden Befülldruck an und können insbesondere beim Unterschreiten eines vorgegebenen minimalen Befülldruckes ein optisches oder akustisches Warnsignal erzeugen.

Zur Steuerung und/oder Regelung des Befülldruckes der Sicherungselemente sind bei diesem Ausführungsbeispiel nicht dargestellte Steuerungsmittel vorgesehen.

Aus der Zeichnung ist nicht ersichtlich und deshalb wird hier erläutert, daß bei diesem Ausführungsbeispiel der Ladefläche 10 ein in Längsrichtung der Ladefläche 10 fördernder Stetigförderer zum Fördern von Ladegut auf die Ladefläche 10 zugeordnet ist, wobei der Stetigförderer bei diesem Ausführungsbeispiel durch ein Förderband gebildet ist, dessen Oberseite die Ladefläche 10 bildet. Dem Förderband ist bei diesem Ausführungsbeispiel eine Aufwickelvorrichtung zum Aufwickeln des Förderbandes zugeordnet, die eine drehantreibbare Wickeltrommel aufweist. Ferner ist dem Förderband eine Abwickelvorrichtung zugeordnet, die ein in Längsrichtung der Ladefläche in Richtung eines Teiles 44 bewegliches Antriebselement aufweist, das bei diesem Ausführungsbeispiel durch ein Seil eines nicht dargestellten Seilzuges gebildet ist.

Weiterhin ist aus der Zeichnung nicht ersichtlich, daß ein in Längsrichtung der Ladefläche verfahrbares Trennelement in Form einer Trennwand zur Trennung der Ladefläche 10 in einen genutzten und einen ungenutzten Teil vorgesehen ist. Wie in Fig. 2 durch einen Doppelpfeil 46 angedeutet, ist die Trennwand in Längsrichtung der Ladefläche 10 hin- und herverfahrbar, wobei sie in Fig. 2 durch eine gestrichelte Linie 48 in einer ersten Verfahrposition und durch eine strichpunktierte Linie 50 in einer zweiten Verfahrposition symbolisiert ist. Bei diesem Ausführungsbeispiel ist die Trennwand an dem der Zugmaschine 4 zugewandten Ende des Transportbandes befestigt, so daß die Trennwand synchron zu einer Förderbewegung des Förderbandes verfährt.

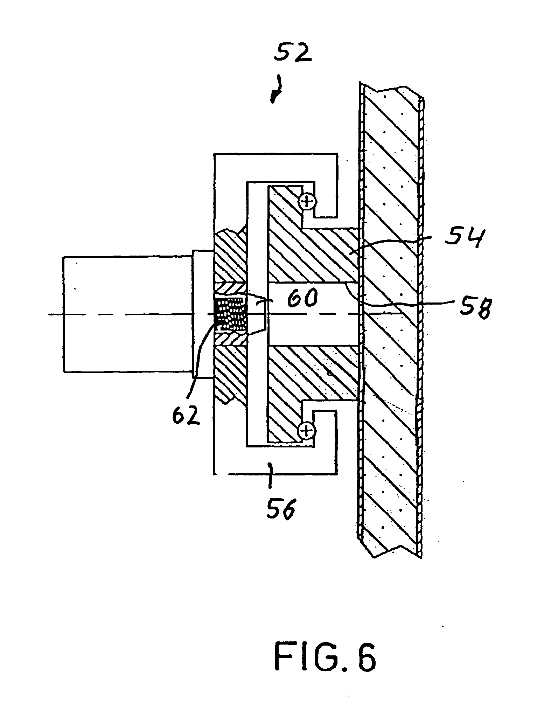

Zur Verriegelung der Trennwand in ihrer jeweiligen Verfahrposition ist eine Verriegelungsvorrichtung 52 vorgesehen, die in Fig. 6 im Schnitt dargestellt ist und bei diesem Ausführungsbeispiel als elektromechanische Verriegelungsvorrichtung ausgebildet ist. Die Verriegelungsvorrichtung 52 weist eine in Längsrichtung der Ladefläche 10 verlaufende Arretierungsschiene 54 auf, die an den Trägern 10 der Tragstruktur 12 befestigt ist. Mit der Trennwand ist verschiebefest ein Gleitstück 56 verbunden, das beim Verfahren der Trennwand in Längsrichtung der Ladefläche 10 auf der Gleitschiene 54 gleitet. Die Gleitschiene 54 weist in Längsrichtung der Ladefläche zueinander beabstandete Arretierungslöcher 58 auf, in die in Verriegelungsposition ein Verriegelungsbolzen 60 eingreift, der über eine Feder 62 in Fig. 6 nach rechts in die Verriegelungsposition vorgespannt ist und mittels eines Elekromagneten, der in Fig. 6 nicht dargestellt ist, entgegen der Federwirkung der Feder 62 in die in Fig. 6 dargestellte Entriegelungsposition bewegbar ist.

Zur Verriegelung der Trennwand wird diese zunächst in die gewünschte Verfahrposition verfahren. Daran anschließend wird der Elektromagnet gelöst, so daß sich der Verriegelungsbolzen 60 unter der Wirkung der Feder 62 in Fig. 6 nach rechts in das Arretierungsloch 58 bewegt und so die Trennwand in Längsrichtung der Ladefläche 10 verriegelt.

Die in Fig. 6 dargestellte Verriegelungsvorrichtung 52 ist der in Fahrtrichtung des Transportfahrzeugs 2 linken Seite der Tragstruktur 12 zugeordnet. In hierzu entsprechendener Weise kann der in Fahrtrichtung rechten Seite der Tragstruktur 12 eine weitere Verriegelungsvorrichtung zugeordnet sein, deren Aufbau dem Aufbau der Verriegelungsvorrichtung 52 entspricht. Auf diese Weise ist die Trennwand beiderseits der Ladefläche 10 an der Tragstruktur 12 verriegelbar, so daß Verwindungen der Trennwand auch bei Belastung zuverlässig vermieden sind.

Die Funktionsweise der erfindungsgemäßen Einrichtung 8 wird nachfolgend anhand der Beladung mit Papierrollen näher erläutert.

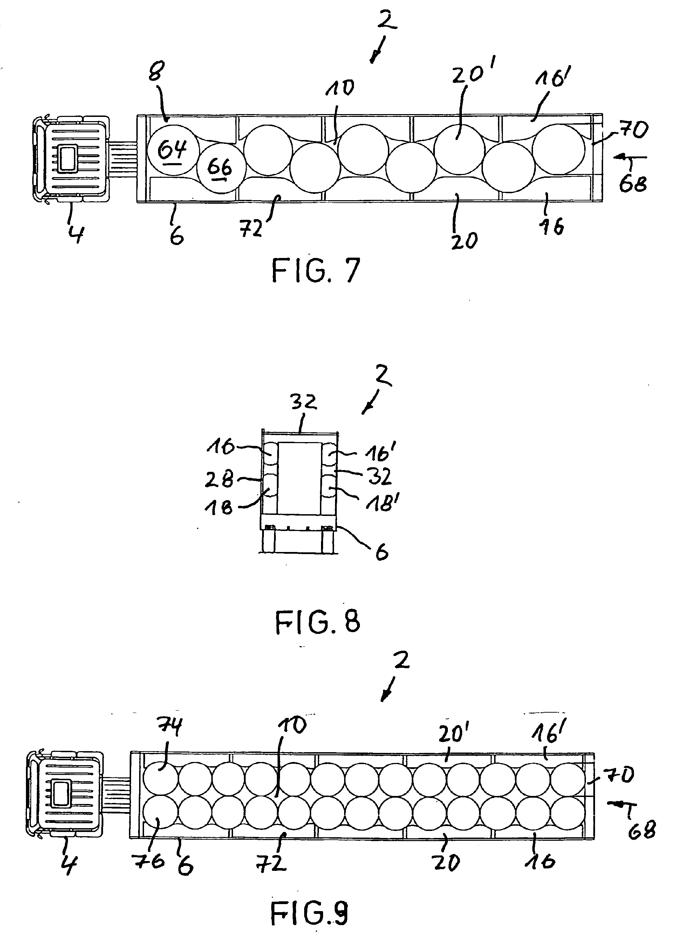

Hierbei wird eine Mehrzahl von Papierrollen, von denen in Fig. 7 lediglich zwei Papierrollen mit den Bezugszeichen 64, 66 versehen sind, auf die Ladefläche 10 geladen. Die Papierrollen 64, 66 werden, beispielsweise mittels eines fahrzeugexternen Förderers, nacheinander auf das die Ladefläche 10 bildende Förderband gefördert, so daß die Papierrollen 64, 66 in Längsrichtung der Ladefläche 10 hintereinander angeordnet sind. Bei einer Förderbewegung des die Ladefläche 10 bildenden Förderbandes werden die Papierrollen 64, 66 in Längsrichtung der Ladefläche 10 in Fig. 7 in Richtung eines Pfeiles 68 gefördert. Zum Bewegen des Förderbandes in der der Richtung des Pfeiles 68 entsprechenden Förderrichtung wird das Förderband mittels des nicht dargestellten Seilzuges in dieser Richtung bewegt.

In der in Fig. 7 dargestellten Beladeposition sind sämtliche zu transportierenden Papierrollen 64, 66 in Längsrichtung der Ladefläche 10 hintereinander auf dieser angeordnet, wobei in dieser Ladeposition eine hintere Ladeluke 70 des Transportfahrzeugs 2 geschlossen werden kann.

Nach Beendigung des Beladevorganges werden die luftsackartigen Sicherungselemente über die Druckspeicheranordnung 34 mit Druckluft beaufschlagt, so daß sie aufgeblasen werden und sich bei ihrer Entfaltung eng an die Papierrollen 64, 66 anlegen, wie in Fig. 7 dargestellt. Wie aus Fig. 7 ersichtlich ist, nehmen die Sicherungselemente im aufgeblasenen Zustand einen quer zur Längsrichtung der Ladefläche 10 zwischen der Tragstuktur 12 bzw. einer seitlichen Wandung 72 und den Papierrollen 64, 66 verbleibenden Raum im wesentlichen vollständig ein, so daß eine Verschiebung der Papierrollen 64, 66 quer zur Längsrichtung der Ladefläche 10 im wesentlichen vermieden ist. Hierbei werden die Befüllmittel durch eine Steuerungseinrichtung angesteuert, so daß die Sicherungselemente mit einem vorgegebenen Befülldruck befüllt werden. Nachdem die Sicherungselemente vollständig aufgeblasen sind, ist der Ladungssicherungsvorgang abgeschlossen, so daß die Papierrollen 64, 66 gesichert sind und ihr Transport mittels des Transportfahrzeugs 2 beginnen kann.

Fig. 8 zeigt eine Ansicht von hinten auf das Transportfahrzeug 2 im gemäß Fig. 7 beladenen Zustand.

Dadurch, daß die im wesentlichen gasdichten Sicherungselemente eine flexible Hülle aufweisen, passen sie sich während des Aufblasens an die äußere Kontur der Papierrollen 64, 66 an, wobei sie sich eng an die Papierrollen 64, 66 anlegen.

Während des Transportes überwachen die Überwachungsmittel den Innendruck der Sicherungselemente. Ein hierbei festgestellter Druck kann durch die Anzeigemittel angezeigt werden. Insbesondere kann dann, wenn der Innendruck der Sicherungselemente oder wenigstens eines der Sicherungselemente einen vorgegebenen minimalen Druck unterschreitet, ein optisches oder akustisches Warnsignal erzeugt werden. Der Fahrer des Transportfahrzeugs 2 kann dann im Bedarfsfalle anhalten und prüfen, ob die Ladung noch in ausreichendem Maße gesichert ist. Auf diese Weise sind Fehlfunktionen der erfindungsgemäßen Einrichtung 8 zuverlässig feststellbar.

Da die Sicherungselemente jedes Paares von Sicherungselementen, beispielsweise des Paares von Sicherungselementen 16, 18, befüllungstechnisch zueinander parallel geschaltet und in Vertikalrichtung übereinander angeordnet sind, so daß sie sich mit derselben Papierrolle in Anlage befinden, ist eine ausreichende Ladungssicherung auch dann noch sichergestellt, wenn eines der Sicherungselemente eines Paares von Sicherungselementen, beispielsweise infolge einer Leckage, ausfallen sollte.

Über eine Temperaturmessung ist ggf. feststellbar, ob ein Abfall des Innendrucks der Sicherungselemente auf einer Leckage oder auf einer Veränderung der Außentemperatur beruht. Wird das Transportfahrzeug 2 beispielsweise in einer warmen Halle beladen, so kann die dort herrschende Temperatur gemessen werden. Gelangt das Transportfahrzeug 2 aus der warmen Halle in eine kühlere Umgebung, so kann die Temperatur erneut gemessen werden. Aus der Temperaturdifferenz können die Steuerungsmittel dann berechnen, ob ein aufgetretener Druckabfall temperaturbedingt ist oder auf eine Leckage eines Sicherungselementes oder auf eine sonstige Störung zurückzuführen ist.

Wirkt während des Transportes eine Querbeschleunigung auf die Papierrollen 64, 66, beispielsweise bei einer Kurvenfahrt, so werden die hierbei auftretenden Kräfte in die Sicherungselemente und von diesen in die Tragstruktur 12 eingeleitet. Von der Tragstruktur 12 werden diese Kräfte dann in die Ladefläche 10 eingeleitet. Auf diese Weise sind Bewegungen der Papierrollen 64, 66 quer zur Längsrichtung der Ladefläche 10, die in dem dargestellten Beispiel mit der Fahrtrichtung des Transportfahrzeugs 2 übreinstimmt, zuverlässig vermieden.

Nach dem Abschluß des Transportes werden die Sicherungselemente unter der Wirkung der Steuerungsmittel entleert, wobei beispielsweise ein Druckausgleich mit der Umgebung herbeigeführt oder die Druckluft aus den Sicherungselementen abgepumpt und in die Druckspeicheranordnung 34 zurückgepumpt werden kann. Beim Entleeren kollabiert die Hülle der Sicherungselemente, so daß sich die Sicherungselemente eng an die Tragstruktur 12 anlegen (vgl. Fig. 4) und die Ladungssicherung dadurch aufgehoben ist.

Daran anschließend können die Papierrollen 64, 66 mittels des Förderbandes entgegen der Richtung des Pfeiles 68 (vgl. Fig. 7) von der Ladefläche 10 abgeladen und beispielsweise an einen externen Förderer abgegeben werden.

Der Entlade- und Ladungsentsicherungsvorgang vollzieht sich somit in umgekehrter Reihenfolge zu dem Belade- und Ladungssicherungsvorgang. Der Lade- und Ladungssicherungsvorgang kann manuell gesteuert werden. Er kann jedoch auch unter der Wirkung von Steuerungsmitteln vollautomatisch ablaufen, derart, daß der Ladungssicherungsvorgang durch Aufblasen der Sicherungselemente vollautomatisch begonnen wird, nachdem sich das Ladegut in der Ladeposition befindet. In hierzu entsprechender Weise kann auch der Ladungsentsicherungs- und Entladevorgang vollautomatisch gesteuert werden, derart, daß der Entladevorgang automatisch gestartet wird, nachdem der Ladungsentsicherungsvorgang durch Entleeren der Sicherungselemente abgeschlossen ist.

Fig. 9 stellt in zu Fig. 7 entsprechender Weise die Ladungssicherung anhand von Papierrollen 74, 76 geringeren Durchmessers dar, wobei die Papierrollen 74, 76 jeweils paarweise auf der Ladefläche 10 nebeneinander stehen. Wie aus Fig. 9 ersichtlich ist, ist auch bei einer derartigen Anordnung eine effiziente Ladungssicherung erzielt, da sich die Sicherungselemente wiederum an die äußere Kontur der Papierrollen 70, 76 anpassen und eng an die Papierrollen 74, 76 anlegen.

Die Figuren 7 und 9 stellen einen Ladezustand dar, in dem die volle Länge der Ladefläche 10 ausgenutzt wird.

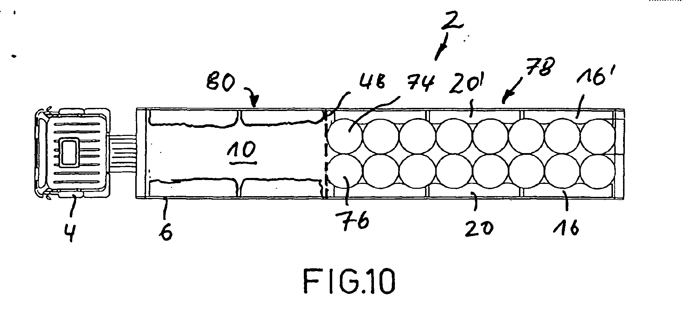

In Fig. 10 ist ein Ladezustand dargestellt, in dem die Ladefläche 10 in Längsrichtung nur zu einem Teil ausgenutzt ist. Zur Erzielung dieses Ladezustandes wird das Förderband mit der Trennwand nur so weit verfahren, bis sich sämtliche Papierrollen 74, 76 auf der Ladefläche befinden. In der dann erreichten Verfahrposition wird die Trennwand mittels der Verriegelungsvorrichtung 52 (vgl. Fig. 6) verriegelt.

Wie aus Fig. 10 ersichtlich ist, ist die Ladefläche 10 dann in einen genutzten Teil 78 und einen ungenutzten Teil 80 unterteilt, wobei die Papierrollen 74, 76 im genutzten Teil 78 durch die Sicherungselemente quer zur Längsrichtung der Ladefläche 10 und in Längsrichtung der Ladefläche 10 durch die Trennwand 48 gegen Bewegungen gesichert sind.

Die erfindungsgemäße Einrichtung 8 ermöglicht auf einfache, schnelle und effiziente Weise eine Ladungssicherung von Ladegut auf der Ladefläche eines Transportfahrzeugs. Die erfindungsgemäße Einrichtung ist besonders gut zur Sicherung von Papierrollen einsetzbar. Sie ist darüber hinaus jedoch auch zur Ladungssicherung von beliebigem anderen, insbesondere unregelmäßig auf der Ladefläche 10 angeordneten Ladegut einsetzbar.

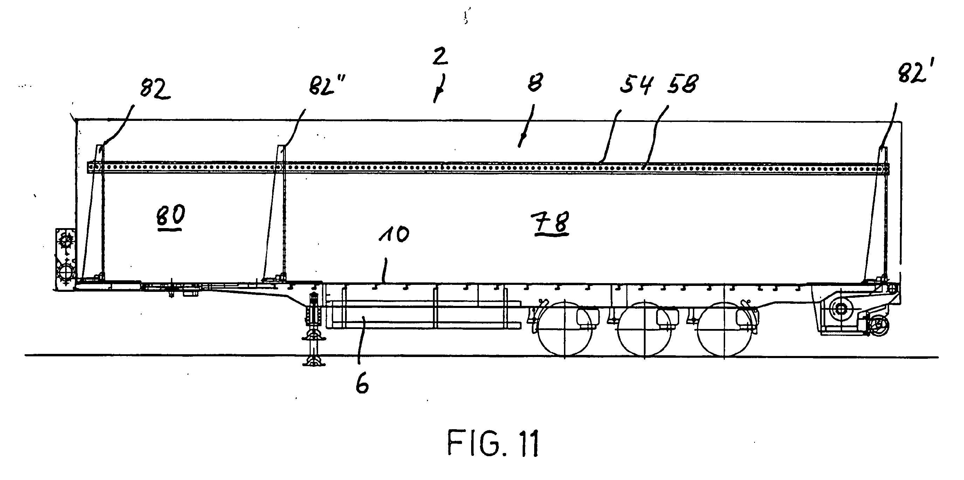

Fig. 11 zeigt eine Seitenansicht des Aufliegers 6 und dient zur Verdeutlichung der Funktion der erfindungsgemäßen Trennwand. Aus Gründen der Übersichtlichkeit der Darstellung sind in Fig. 11 andere Teile der erfindungsgemäßen Einrichtung 8, insbesondere die Tragstruktur und die Sicherungselemente, weggelassen. In Fig. 11 ist die Trennwand mit dem Bezugszeichen 82 in einer Verfahrposition in Längsrichtung der Ladefläche 10 dargestellt, die einem maximalen Beladungszustand der Ladefläche 10 entspricht. In dieser Verfahrposition befindet sich die Trennwand 82 an dem in Fahrtrichtung vorderen Ende der Ladefläche 10, so daß die Ladefläche 10 vollständig mit in Fig. 11 nicht dargestellten Ladegut beladen werden kann.

Mit dem Bezugszeichen 82' ist in Fig. 11 die Trennwand in einer Verfahrposition dargestellt, die dem unbeladenen Zustand des Transportfahrzeugs 2 entspricht. In dieser Verfahrposition befindet sich die Trennwand 82' an dem in Fahrtrichtung des Transportfahrzeugs 2 gesehen hinteren Ende der Ladefläche 10.

Mit dem Bezugszeichen 82" ist in Fig. 11 die Trennwand in einer Verfahrposition dargestellt, die einem teilbeladenen Zustand der Ladefläche 10 entspricht. In dieser Verfahrposition befindet sich die Trennwand 82" zwischen dem in Fahrtrichtung vorderen und dem in Fahrtrichtung hinteren Ende der Ladefläche 10. In dieser Verfahrposition unterteilt die Trennwand 82" die Ladefläche 10 in einen genutzten Teil 78, der sich in Längsrichtung der Ladefläche 10 zwischen der Trennwand 82" und dem in Fahrtrichtung hinteren Ende der Ladefläche 10 befindet, und einen ungenutzten Teil 80, der sich in Längsrichtung der Ladefläche zwischen dem in Fahrtrichtung vorderen Ende der Ladefläche 10 und der Trennwand 82'' befindet.

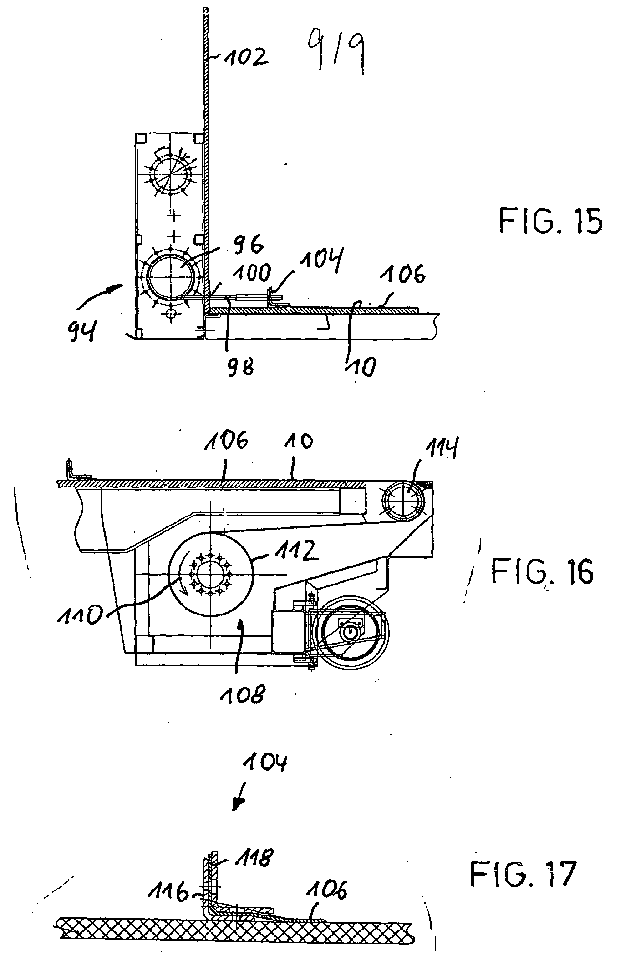

Erfindungsgemäß ist die Trennwand 82 mittels wenigstens einer motorischen Antriebseinrichtung in Längsrichtung der Ladefläche verfahrbar, wobei die motorische Antriebseinrichtung durch in der Zeichnung nicht dargestellte Steuermittel manuell oder automatisch ansteuerbar ist. Ein Ausführungsbeispiel einer motorischen Antriebseinrichtung wird weiter unten anhand der Fig. 15 und 16 näher erläutert.

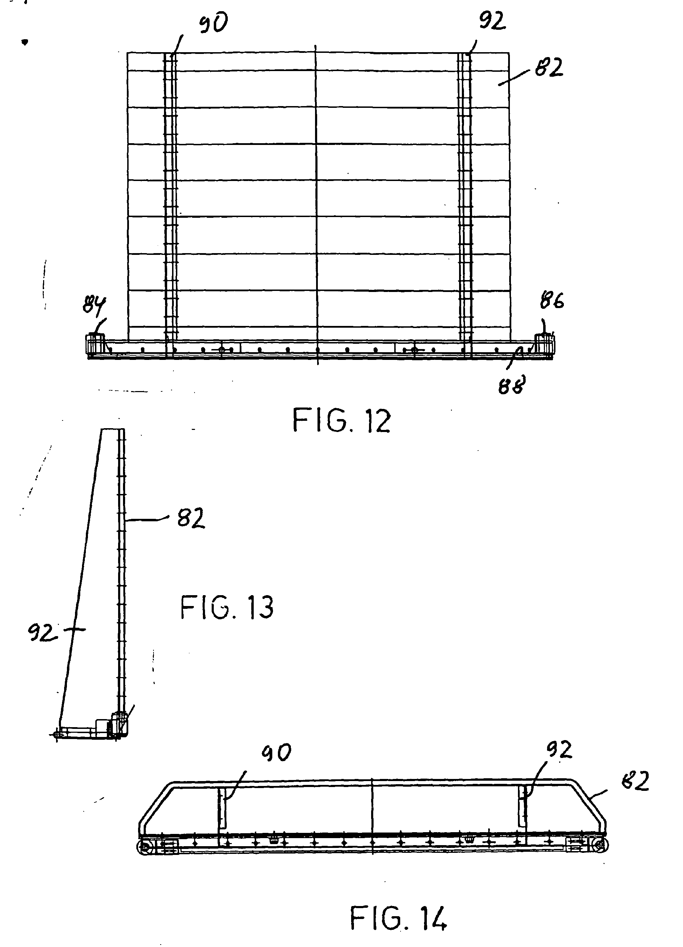

Fig. 12 zeigt eine Ansicht der Trennwand 82, die sich über Führungsrollen 84, 86 auf einem Boden 88 des Aufliegers 6 abstützt.

Um die Stabilität der Trennwand 82 gegen Verwindungen zu erhöhen, weist die Trennwand 82 zwei quer zur Längsrichtung der Ladefläche 10 zueinander beabstandete Streben 90, 92 auf, die im wesentlichen in Vertikalrichtung der Trennwand 82 verlaufen und sich zu ihrem oberen Ende hin trapezartig verjüngen.

Fig. 13 zeigt eine Seitenansicht der Trennwand 82.

Fig. 14 zeigt eine Ansicht der Trennwand 82 von oben.

In Fig. 15 sind Einzelheiten einer motorischen Antriebseinrichtung 94 dargestellt, die der Trennwand 82 zum Verfahren derselben in Fahrtrichtung des Transportfahrzeugs 2 zugeordnet ist. Die Antriebseinrichtung 94 weist bei diesem Ausführungsbeispiel eine elektromotorisch angetriebene Seilwinde 96 auf, deren Seil 98 durch eine Ausnehmung 100 in einer Stirnwand 102 geführt ist, die an dem in Fahrtrichtung vorderen Ende der Ladefläche 10 angeordnet ist. Das Seil 98 der Seilwinde 96 ist über eine Klemmvorrichtung 104, die weiter unten anhand von Fig. 17 näher erläutert wird, zugfest mit einem Förderband 106 des Stetigförderers verbunden. Die in Fig. 15 aus Gründen der Übersichtlichkeit nicht dargestellte Trennwand 82 ist an der Klemmvorrichtung 104 befestigt, beispielsweise durch Verschrauben oder Verschweißen. Auf diese Weise ist die Trennwand 82 antriebstechnisch an das Förderband des Stetigförderers gekoppelt, so daß die Trennwand 82 im wesentlichen synchron zu einer Förderbewegung des Förderbandes des Stetigförderers verfährt.

In Fig. 16 ist eine Aufwickelvorrichtung 108 zum Aufwickeln des Förderbandes 106 dargestellt, die eine zum Aufwickeln des Förderbandes 106 in Richtung eines Pfeiles 110 motorisch drehantreibbare Wickeltrommel 112 aufweist. Das Förderband 106 ist über eine Umlenkrolle 114 zu der Wickeltrommel 112 geführt. Die Trennwand 82 ist in Fig. 16 aus Gründen der Übersichtlichkeit wiederum weggelassen.

Um das Förderband 106 in Längsrichtung der Ladefläche 10 in Richtung auf die Stirnwand 102 zu, also in Fahrtrichtung des Transportfahrzeugs 2 zu bewegen, wird die Seilwinde 96 elektromotorisch so drehangetrieben, daß das Seil 98 aufgewickelt wird. Hierbei zieht das Seil 98 das Förderband 106 zusammen mit der an der Klemmvorrichtung 104 befestigten Trennwand 82 in Fig. 15 nach links. Hierbei wird das Förderband 106 von der Wickeltrommel 112 abgewickelt, deren elektromotorischer Antrieb hierbei stillgesetzt bzw. ausgekuppelt ist. Die Seilwinde 98 bildet somit eine Abwickelvorrichtung zum Abwickeln des Förderbandes 106 von der Wickeltrommel 112. Aufgrund der bei diesem Ausführungsbeispiel vorgesehenen antriebstechnischen Kopplung der Trennwand 82 an das Förderband 106 des Stetigförderers bildet die Aufwickelvorrichtung 108 bei diesem Ausführungsbeispiel eine der Trennwand 82 zum Verfahren derselben entgegen der Fahrtrichtung des Transportfahrzeugs 2 zugeordnete motorische Antriebseinrichtung.

Beim Beladen des Transportfahrzeugs 2 befindet sich das in Fahrtrichtung vordere Ende des Ladegutes bzw. bei Beladung mit Stückgütern das in Fahrtrichtung vordere Stückgut unmittelbar an der Trennwand 82 und wird über das Förderband 106 des Stetigförderers auf die Ladefläche 10 des Transportfahrzeugs gefördert. Befindet sich das gesamte Ladegut bzw. sämtliches Stückgut auf der Ladefläche 10, so wird das Förderband 106 mit der Trennwand 82 in der dann erreichten Verfahrposition angehalten und in dieser Verfahrposition mittels der Verriegelungsvorrichtung 52 (vergl. Fig. 6) verriegelt. Nach Abschluß dieses Beladevorgangs wird der Ladungssicherungsvorgang durch Aufblasen der Sicherungselemente ausgeführt.

Nach erfolgten Transport wird zunächst die Ladung dadurch entsichert, daß die Sicherungselemente entleert werden. Daran anschließend wird die Trennwand 82 über die Verriegelungsvorrichtung 52 entriegelt.

Zum Entladen des Transportfahrzeuges 2 wird das Förderband 106 elektromotorisch auf die Wickeltrommel 112 aufgewickelt, wobei der elektromotorische Antrieb der Seilwinde 96 stillgesetzt oder ausgekuppelt ist. Hierbei wird das Förderband 106 soweit entgegen der Fahrtrichtung des Transportfahrzeuges 2 bewegt, bis die gesamte Ladung bzw. sämtliches Stückgut abgeladen ist.

Das Aufgeben der Ladung auf das Förderband 106 beim Beladungsvorgang kann über einen fahrzeugexternen Stetigförderer erfolgen. In hierzu entsprechender Weise kann die Ladung von dem Förderband 106 beim Entladungsvorgang an einen externen Stetigförderer übergeben werden.

Fig. 17 zeigt eine Einzelheit der Klemmvorrichtung 104 die zwei Winkelprofile 116, 118 aufweist, zwischen denen das Förderband 106 eingeklemmt und dadurch zugfest mit der Klemmvorrichtung 104 verbunden ist. Zum Festklemmen des Förderbandes 106 zwischen den Winkelprofilen 116, 118 können beispielsweise Klemmschrauben verwendet werden.

Bei dem in der Zeichnung dargestellten Ausführungsführungsbeispiel ist die Trennwand 82 antriebstechnisch an das Förderband 106 des Stetigförderers gekoppelt, so daß die Trennwand 82 im wesentlichen synchron zu dem Förderband 106 des Stetigförderers ververfährt. Ferner sind bei diesem Ausführungsbeispiel der Trennwand 82 zwei motorische Antriebseinrichtungen zugeordnet, von denen die elektromotorische Antriebseinrichtung 94 zum Verfahren der Trennwand 82 in Fahrtrichtung des Transportfahrzeugs 2 und die durch die Aufwickelvorrichtung 108 des Förderbandes 106 gebildete elektromotorische Antriebseinrichtung zum Verfahren der Trennwand 82 entgegen der Fahrtrichtung des Transportfahrzeuges 2 dient. Es ist erfindungsgemäß jedoch auch möglich, der Trennwand 82 eine separate Antriebseinrichtung zu zuordnen, so daß das Verfahren der Trennwand 82 unabhängig von einer Bewegung des Förderbandes 106 erfolgt, das erfindungsgemäß nicht zwingend erforderlich ist und lediglich in einer bevorzugten Ausführungsform vorhanden ist. Ist erfindungsgemäß ein Förderband vorgesehen, an das die Trennwand antriebstechnisch gekoppelt ist, so kann beispielsweise ein umlaufendes Endlos-Förderband verwendet werden, das über eine in ihrer Drehrichtung umsteuerbare Antriebstrommel angetrieben wird. Bei dieser Ausführungsform ist der Trennwand 82 dann erfindungsgemäß eine einzige motorische Antriebseinrichtung zugeordnet.

## Patentansprüche

1. Einrichtung zur Sicherung von Ladegut auf einer Ladefläche eines Transportfahrzeugs, insbesondere eines Lastkraftwagens,
mit einer Tragstruktur (12), an der wenigstens ein Sicherungselement (16) angeordnet ist, das eine flexible, mit einem Füllmedium befüllbare Hülle (24) aufweist und über eine Befüllöffnung (26) zerstörungsfrei entleerbar und wiederbefüllbar ist,
wobei das Sicherungselement (16) im beladenen Zustand des Transportfahrzeugs an dem Ladegut anliegt,
**gekennzeichnet durch**
ein in Längsrichtung der Ladefläche (10) verfahrbares Trennelement zur Trennung der Ladefläche (10) in einen genutzten Teil (78) und einen ungenutzten Teil (80), wobei dem Trennelement zum Verfahren desselben in Längsrichtung der Ladefläche (10) wenigstens eine motorische Antriebseinrichtung zugeordnet ist,
wobei das Sicherungselement (16) oder die Sicherungselemente (16, 18, 20, 22, 16', 18', 20', 22') im befüllten, insbesondere aufgeblasenen Zustand einen quer zur Längsrichtung der Ladefläche (10) zwischen dem Ladegut und der Tragstruktur (12) verbleibenden Raum im wesentlichen vollständig einnehmen, derart, daß eine Verschiebung des Ladegutes quer zur Längsrichtung der Ladefläche (10) im wesentlichen vermieden ist.

2. Einrichtung nach Anspruch 1, **dadurch gekennzeichnet, daß** das Trennelement als Trennwand (82) ausgebildet ist.

3. Einrichtung nach Anspruch 1 oder 2, **dadurch gekennzeichnet, daß** an der Tragstruktur (12) wenigstens zwei quer zur Längsrichtung der Ladefläche (10) zueinander beabstandete Sicherungselemente (16, 16') angeordnet sind.

4. Einrichtung nach einem der vorhergehenden Ansprüche, **dadurch gekennzeichnet, daß** an der Tragstruktur (12) wenigstens zwei in Längsrichtung der Ladefläche (10) zueinander beabstandete Sicherungselemente (16, 16') angeordnet sind.

5. Einrichtung nach einem der vorhergehenden Ansprüche, **dadurch gekennzeichnet, daß** quer zur Längsrichtung der Ladefläche gesehen auf jeder Seite an der Tragstruktur (12) wenigstens zwei in Längsrichtung der Ladefläche zueinander beabstandete Sicherungselemente (16, 22 bzw. 16', 22') angeordnet sind.

6. Einrichtung nach einem der vorhergehenden Ansprüche, **dadurch gekennzeichnet, daß** an der Tragstruktur (12) wenigstens zwei in Vertikalrichtung zueinander beabstandete Sicherungselemente (16, 18 bzw. 16', 18') angeordnet sind.

7. Einrichtung nach einem der vorhergehenden Ansprüche, **dadurch gekennzeichnet, daß** dem in Längsrichtung der Ladefläche (10) vorderen Ende und/oder dem in Längsrichtung der Ladefläche (10) hinteren Ende der Ladefläche (10) wenigstens ein Sicherungselement zugeordnet ist.

8. Einrichtung nach einem der vorhergehenden Ansprüche, **dadurch gekennzeichnet, daß** das Sicherungselement oder wenigstens eines der Sicherungselemente (16, 18, 20, 22, 16', 18', 20' 22') an der Tragstruktur (12) befestigt ist.

9. Einrichtung nach einem der vorhergehenden Ansprüche, **dadurch gekennzeichnet, daß** die Tragstruktur (12) wenigstens zwei in Längsrichtung der Ladefläche (10) zueinander beabstandete Träger (14) aufweist.

10. Einrichtung nach Anspruch 9, **dadurch gekennzeichnet, daß** die Träger (14) beiderseits der Ladefläche (10) jeweils einen Schenkel (28, 30) aufweisen, wobei die der Ladefläche (10) zugewandten Enden der Schenkel mit der Ladefläche (10) verbunden sind und die der Ladefläche (10) abgewandten Enden der Schenkel (28, 30) unmittelbar oder über wenigstens einen Querschenkel (32) miteinander verbunden sind.

11. Einrichtung nach Anspruch 10, **dadurch gekennzeichnet, daß** die der Ladefläche (10) zugewandten Enden der Schenkel (28, 30) innig mit der Ladefläche (10) verbunden sind.

12. Einrichtung nach einem der vorhergehenden Ansprüche, **dadurch gekennzeichnet, daß** die Hülle (24) des Sicherungselementes (16) oder wenigstens eines der Sicherungselemente (16, 18, 20, 22, 16', 18', 20', 22') wenigstens abschnittsweise aus einem elastisch verformbaren, insbesondere dehnbarem Material, insbesondere einem Elastomer, besteht.

13. Einrichtung nach einem der vorhergehenden Ansprüche, **dadurch gekennzeichnet, daß** die Hülle des Sicherungselementes (16) oder wenigstens eines der Sicherungselemente (16, 18, 20, 22, 16', 18', 20', 22') wenigstens abschnittsweise mit einer Verstärkungsschicht oder Verstärkungseinlage, insbesondere aus einem textilen Material, versehen ist.

14. Einrichtung nach einem der vorhergehenden Ansprüche, **dadurch gekennzeichnet, daß** wenigstens zwei Sicherungselemente (16, 18) befüllungstechnisch parallel geschaltet sind.

15. Einrichtung nach einem der vorhergehenden Ansprüche, **dadurch gekennzeichnet, daß** wenigstens zwei Sicherungselemente befüllungstechnisch in Reihe geschaltet sind.

16. Einrichtung nach einem der vorhergehenden Ansprüche, **dadurch gekennzeichnet, daß** wenigstens zwei seitlich von der Ladefläche angeordnete Sicherungselemente (16, 20) unmittelbar aneinander angrenzend angeordnet sind.

17. Einrichtung nach einem der vorhergehenden Ansprüche, **gekennzeichnet durch** Befüllmittel zur vorzugsweise automatischen Befüllung des Sicherungselementes (16) oder wenigstens eines der Sicherungselemente (16, 18, 20, 22, 16', 18', 20', 22') mit dem Füllmedium und/oder zur vorzugsweise automatischen Entleerung des Sicherungselementes (16) oder wenigstens eines der Sicherungselemente (16, 18, 20, 22, 16', 18', 20', 22').

18. Einrichtung nach Anspruch 17, **dadurch gekennzeichnet, daß** die Befüllmittel das Sicherungselement (16) oder wenigstens eines der Sicherungselemente (16, 18, 20, 22, 16', 18', 20', 22') mit einem vorgegebenen Befülldruck befüllen.

19. Einrichtung nach einem der vorhergehenden Ansprüche, **dadurch gekennzeichnet, daß** dem Sicherungselement (16) oder wenigstens einem der Sicherungselemente (16, 18, 20, 22, 16', 18', 20', 22') Überwachungsmittel zur Überwachung des Befülldruckes des jeweiligen Sicherungselementes (16, 18, 20, 22, 16', 18', 20', 22') zugeordnet sind.

20. Einrichtung nach einem der vorhergehenden Ansprüche, **dadurch gekennzeichnet, daß** dem Sicherungselement (16) oder wenigstens einem der Sicherungselemente (16, 18, 20, 22, 16', 18', 20', 22') Steuerungsmittel zur Steuerung und/oder Regelung des Befülldruckes des jeweiligen Sicherungselementes (16, 18, 20, 22, 16', 18', 20', 22') zugeordnet sind.

21. Einrichtung nach einem der vorhergehenden Ansprüche, **gekennzeichnet durch** Anzeigemittel zum Anzeigen des Befülldruckes, insbesondere eines Unterschreitens eines vorgegebenen minimalen Befülldruckes, wenigstens eines Sicherungselementes (16).

22. Einrichtung nach einem der vorhergehenden Ansprüche, **dadurch gekennzeichnet, daß** der Ladefläche (10) wenigstens ein in Längsrichtung der Ladefläche fördernder Stetigförderer zum Fördern von Ladung auf die Ladefläche (10) zugeordnet ist.

23. Einrichtung nach Anspruch 22, **dadurch gekennzeichnet, daß** die Ladefläche (10) wenigstens teiweise durch den Stetigförderer gebildet ist.

24. Einrichtung nach Anspruch 22 oder 23, **dadurch gekennzeichnet, daß** der Stetigförderer wenigstens ein Förderband (106) aufweist.

25. Einrichtung nach Anspruch 24, **dadurch gekennzeichnet, daß** dem Förderband (106) wenigstens eine Aufwikkelvorrichtung zum Aufwickeln des Förderbandes (106) zugeordnet ist.

26. Einrichtung nach Anspruch 25, **dadurch gekennzeichnet, daß** die Aufwickelvorrichtung eine drehantreibbare Wickeltrommel (112) aufweist.

27. Einrichtung nach einem der Ansprüche 24 bis 26, **dadurch gekennzeichnet, daß** dem Förderband (106) eine Abwickelvorrichtung (94) zugeordnet ist.

28. Einrichtung nach Anspruch 27, **dadurch gekennzeichnet, daß** die Abwickelvorrichtung ein in Längsrichtung der Ladefläche (10) bewegliches Antriebselement aufweist, das mit einem Ende des Förderbandes (106) zum Abwickeln desselben verbunden ist.

29. Einrichtung nach Anspruch 28, **dadurch gekennzeichnet, daß** die Abwickelvorrichtung (94) einen Seil- oder Kettenzug aufweist, dessen Seil (98) bzw. Kette das Antriebselement bildet.

30. Einrichtung nach einem der vorhergehenden Ansprüche, **dadurch gekennzeichnet, daß** das Trennelement mittels einer Verriegelungsvorrichtung (52) in seiner jeweiligen Verfahrposition verriegelbar ist.

31. Einrichtung nach Anspruch 30, **dadurch gekennzeichnet, daß** die Verriegelungsvorrichtung (52) als elektromechanische Verriegelungsvorrichtung ausgebildet ist.

32. Einrichtung nach einem der vorhergehenden Ansprüche, **dadurch gekennzeichnet, daß** das Trennelement antriebstechnisch derart an den Stetigförderer gekoppelt ist, daß das Trennelement im wesentlichen synchron zu einer Förderbewegung des Stetigförderers verfährt.

33. Einrichtung Anspruch 32, **dadurch gekennzeichnet, daß** das Trennelement an einem beweglichen Teil des Stetigförderers befestigt ist.

34. Einrichtung nach einem der vorhergehenden Ansprüche, **dadurch gekennzeichnet, daß** dem Trennelement wenigstens ein Sicherungselement zugeordnet, insbesondere an diesem angeordnet ist.

35. Transportfahrzeug für den Transport von Ladegut auf einer Ladefläche, **dadurch gekennzeichnet, daß** es eine Einrichtung (8) nach einem der vorhergehenden Ansprüche aufweist.

## Claims

1. Device for securing a load on a loading area of a transport vehicle, in particular a lorry,
with a support structure (12), on which at least one securing element (16) is arranged which comprises a flexible casing (24) which can be filled with a filling medium and can be emptied and refilled through a filling opening (26) without damage,
wherein the securing element (16) in the loaded state of the transport vehicle bears against the loaded product,
**characterised by**
a separating element which can move in the longitudinal direction of the loading area (10) for separating the loading area (10) into a used part (78) and an unused part (80), wherein at least one motor drive device is assigned to the separating element for moving the latter in the longitudinal direction of the loading area (10),
wherein the securing element (16) or the securing elements (16, 18, 20, 22, 16', 18', 20', 22') in the filled, in particular inflated state completely fill the remaining space perpendicular to the longitudinal direction of the loading area (10) between the load and the support structure (12), such that a displacement of the load at right angles to the longitudinal direction of the loading area (10) is substantially avoided.

2. Device according to claim 1, **characterised in that** the separating element is designed as a separating wall (82).

3. Device according to claim 1 or 2, **characterised in that** on the support structure (12) at least two securing elements (16, 16') are arranged spaced apart from one another at right angles to the longitudinal direction of the loading area (10).

4. Device according to one of the preceding claims, **characterised in that** on the support structure (12) at least two securing elements (16, 16') are arranged spaced apart from one another in the longitudinal direction of the loading area (10).

5. Device according to one of the preceding claims, **characterised in that** as viewed perpendicular to the longitudinal direction of the loading area on each side on the support structure (12) at least two securing elements (16, 22, or 16',22') are arranged spaced apart from one another in longitudinal direction of the loading area.

6. Device according to one of the preceding claims, **characterised in that** on the support structure (12) at least two securing elements (16, 18 or 16', 18') are arranged spaced apart from one another in vertical direction.

7. Device according to one of the preceding claims, **characterised in that** at least one securing element is assigned to the front end in longitudinal direction of the loading area (10) and/or the rear end of the loading area (10) in longitudinal direction of the loading area (10).

8. Device according to one of the preceding claims, **characterised in that** the securing element or at least one of the securing elements (16, 18, 20, 22, 16', 18', 20', 22') is secured onto the support structure (12).

9. Device according to one of the preceding claims, **characterised in that** the support structure (12) comprises at least two supports (14) spaced apart from one another in the longitudinal direction of the loading area (10).

10. Device according to claim 9, **characterised in that** the supports (14) on both sides of the loading area (10) each comprise a leg (28, 30), wherein the ends of the legs facing the loading area (10) are joined to the loading area (10) and the ends of the legs (28, 30) averted from the loading area (10) are joined together directly or by means of at least one transverse leg (32).

11. Device according to claim 10, **characterised in that** the ends of the legs (28, 30) facing the loading area (10) are connected intimately with loading area (10).

12. Device according to one of the preceding claims, **characterised in that** the casing (24) of the securing element (16) or at least one of the securing elements (16, 18, 20, 22, 16', 18', 20', 22') is made at least in sections of an elastically deformable, in particular stretchable material, in particular an elastomer.

13. Device according to one of the preceding claims, **characterised in that** the casing of the securing element (16) or at least one of the securing elements (16, 18, 20, 22, 16', 18', 20', 22') is provided at least in sections with a reinforcing layer or reinforcing insert, in particular made from a textile material.

14. Device according to one of the preceding claims, **characterised in that** at least two securing elements (16, 18) are connected parallel to one another in terms of filling technology.

15. Device according to one of the preceding claims, **characterised in that** at least two securing elements are connected to one another in series in terms of filling technology.

16. Device according to one of the preceding claims, **characterised in that** at least two securing elements (16, 20) arranged laterally to the loading area are arranged directly adjoining one another.

17. Device according to one of the preceding claims, **characterised by** fillings means for the preferably automatic filling of the securing element (16) or at least one of the securing elements (16, 18, 20, 22, 16', 18', 20', 22') with the filling medium and/or for the preferably automatic emptying of the securing element (16) or at least one of the securing elements (16, 18, 20, 22, 16', 18', 20', 22').

18. Device according to claim 17, **characterised in that** the filling means fill the securing element (16) or at least one of the securing elements (16, 18, 20, 22, 16', 18', 20', 22') at a predetermined filling pressure.

19. Device according to one of the preceding claims, **characterised in that** monitoring means for monitoring the filling pressure of the respective securing element (16, 18, 20, 22, 16', 18', 20', 22') are assigned to the securing element (16) or at least one of the securing elements (16, 18, 20, 22, 16', 18', 20', 22').

20. Device according to one of the preceding claims, **characterised in that** control means for controlling and/or regulating the filling pressure of the respective securing element (16, 18, 20, 22, 16', 18', 20', 22') are assigned to the securing element (16) or at least one of the securing elements (16, 18, 20, 22, 16', 18', 20', 22').

21. Device according to one of the preceding claims, **characterised by** display means for displaying the filling pressure of at least one securing element (16), in particular the falling below of a predetermined minimum filling pressure.

22. Device according to one of the preceding claims, **characterised in that** at least one steady-flow conveyor conveying in the longitudinal direction of the loading area for conveying loads onto the loading area (10) is assigned to the loading area (10).

23. Device according to claim 22, **characterised in that** the loading area (10) is formed at least party by the steady-flow conveyor.

24. Device according to claim 22 or 23, **characterised in that** the steady-flow conveyor comprises at least one conveyor belt (106).

25. Device according to claim 24, **characterised in that** at least one wind-on device for winding the conveyor belt (106) is assigned to the conveyor belt (106).

26. Device according to claim 25, **characterised in that** the wind-on device comprises a rotary driven winding drum (112).

27. Device according to one of claims 24 to 26, **characterised in that** a wind-on device (94) is assigned to the conveyor belt (106).

28. Device according to claim 27, **characterised in that** the wind-on device comprises a drive element moveable in the longitudinal direction of the loading area (10), which drive element is connected to one end of the conveyor belt (106) for winding the latter.

29. Device according to claim 28, **characterised in that** the wind-on device (94) comprises a cable or chain pull, the cable (98) or chain of which forms the drive element.

30. Device according to one of the preceding claims, **characterised in that** the separating element can be locked by means of a locking device (52) in its respective travelling position.

31. Device according to claim 30, **characterised in that** the locking device (52) is designed as an electromechanical locking device.

32. Device according to one of the preceding claims, **characterised in that** the separating element is coupled in terms of drive technology to the steady-flow conveyor, such that the separating element drives essentially synchronously with the conveying movement of the steady-flow conveyor.

33. Device according to claim 32, **characterised in that** the separating element is secured onto a movable part of the steady-flow conveyor.

34. Device according to one of the preceding claims, **characterised in that** at least one securing element is assigned to the separating element, in particular is arranged on the latter.

35. Transport vehicle for transporting a load on a loading area, **characterised in that** it comprises a device (8) according to one of the preceding claims.

## Revendications

1. Dispositif pour immobiliser un chargement sur une plate-forme de chargement d'un véhicule de transport, en particulier un camion,
comportant une structure de support (12), sur laquelle est disposé au moins un élément d'immobilisation (16), qui comporte une gaine (24) flexible, qui peut contenir un fluide de remplissage et qui peut être vidée et remplie à nouveau sans dommage par l'intermédiaire d'une ouverture de remplissage (26),
ledit élément d'immobilisation (16), à l'état chargé du véhicule de transport, venant en appui contre le chargement,
**caractérisé par**
un élément de séparation, mobile dans la direction longitudinale de la plate-forme de chargement (10) et destiné à séparer la plate-forme de chargement (10) en une partie utilisée (78) et une partie non utilisée (80), au moins un système d'entraînement à moteur étant associé à l'élément de séparation pour le déplacement de celui-ci dans la direction longitudinale de la plate-forme de chargement (10),
sachant que l'élément d'immobilisation (16) ou les éléments d'immobilisation (16, 18, 20, 22, 16', 18', 20', 22'), à l'état rempli, en particulier gonflé, occupent sensiblement en totalité un espace, orienté transversalement à la direction longitudinale de la plate-forme de chargement (10) et subsistant entre le chargement et la structure de support (12), de telle sorte qu'un mouvement du chargement transversalement à la direction longitudinale de la plate-forme de chargement (10) est sensiblement empêché.

2. Dispositif selon la revendication 1, **caractérisé en ce que** l'élément de séparation est réalisé sous forme de cloison (82).

3. Dispositif selon la revendication 1 ou 2, **caractérisé en ce que** sur la structure de support (12) sont disposés au moins deux éléments d'immobilisation (16, 16'), écartés l'un de l'autre transversalement à la direction longitudinale de la plate-forme de chargement (10).

4. Dispositif selon l'une quelconque des revendications précédentes, **caractérisé en ce que** sur la structure de support (12) sont disposés au moins deux éléments d'immobilisation (16, 16'), écartés l'un de l'autre dans la direction longitudinale de la plate-forme de chargement (10).

5. Dispositif selon l'une quelconque des revendications précédentes, **caractérisé en ce que**, transversalement à la direction longitudinale de la plate-forme de chargement, sont disposés sur chaque côté de la structure de support (12) au moins deux éléments d'immobilisation (16, 22 et 16', 22') écartés l'un de l'autre dans la direction longitudinale de la plate-forme de chargement.

6. Dispositif selon l'une quelconque des revendications précédentes, **caractérisé en ce que** sur la structure de support (12) sont disposés au moins deux éléments d'immobilisation (16, 18 et 16', 18') écartés l'un de l'autre dans la direction verticale.

7. Dispositif selon l'une quelconque des revendications précédentes, **caractérisé en ce qu'**au moins un élément d'immobilisation est associé à l'extrémité avant de la plate-forme de chargement (10), par référence à la direction longitudinale de la plate-forme de chargement (10), et/ou à l'extrémité arrière de ladite plate-forme de chargement, par référence à la direction longitudinale de la plate-forme de chargement (10).

8. Dispositif selon l'une quelconque des revendications précédentes, **caractérisé en ce que** l'élément d'immobilisation ou au moins un des éléments d'immobilisation (16, 18, 20, 22, 16', 18', 20', 22') est fixé sur la structure de support (12).

9. Dispositif selon l'une quelconque des revendications précédentes, **caractérisé en ce que** la structure de support (12) comporte au moins deux supports (14) écartés l'un de l'autre dans la direction longitudinale de la plate-forme de chargement (10).

10. Dispositif selon la revendication 9, **caractérisé en ce que** les supports (14) comportent, de part et d'autre de la plate-forme de chargement (10), respectivement une branche (28, 30), les extrémités desdites branches, orientées vers la plate-forme de chargement (10) étant reliées à la plate-forme de chargement (10) et les extrémités desdites branches (28, 30), opposées à la plate-forme de chargement (10), étant reliées entre elles directement ou par l'intermédiaire d'au moins une branche transversale (32).

11. Dispositif selon la revendication 10, **caractérisé en ce que** les extrémités des branches (28, 30), orientées vers la plate-forme de chargement (10), sont étroitement reliées à la plate-forme de chargement (10).

12. Dispositif selon l'une quelconque des revendications précédentes, **caractérisé en ce que** la gaine (24) de l'élément d'immobilisation (16) ou d'au moins l'un des éléments d'immobilisation (16, 18, 20, 22, 16', 18', 20', 22') est réalisée au moins par zones dans un matériau élastiquement déformable, notamment extensible, en particulier un élastomère.

13. Dispositif selon l'une quelconque des revendications précédentes, **caractérisé en ce que** la gaine de l'élément d'immobilisation (16) ou d'au moins un des éléments d'immobilisation (16, 18, 20, 22, 16', 18', 20', 22') est munie au moins par zones d'une couche de renfort ou d'une doublure de renfort, en particulier en matériau textile.

14. Dispositif selon l'une quelconque des revendications précédentes, **caractérisé en ce qu'**au moins deux éléments d'immobilisation (16, 18) sont montés en parallèle sur le plan de la technique de remplissage.

15. Dispositif selon l'une quelconque des revendications précédentes, **caractérisé en ce qu'**au moins deux éléments d'immobilisation sont montés en série sur le plan de la technique de remplissage.

16. Dispositif selon l'une quelconque des revendications précédentes, **caractérisé en ce qu'**au moins deux éléments d'immobilisation (16, 20), disposés latéralement sur la plate-forme de chargement, sont disposés directement adjacents l'un à l'autre.

17. Dispositif selon l'une quelconque des revendications précédentes, **caractérisé par** des moyens de remplissage pour le remplissage de préférence automatique de l'élément d'immobilisation (16) ou d'au moins un des éléments d'immobilisation (16, 18, 20, 22, 16', 18', 20', 22') avec le fluide de remplissage et/ou pour le vidage de préférence automatique de l'élément d'immobilisation (16) ou d'au moins un des éléments d'immobilisation (16, 18, 20, 22, 16', 18', 20', 22').

18. Dispositif selon la revendication 17, **caractérisé en ce que** les moyens de remplissage de l'élément d'immobilisation (16) ou d'au moins un des éléments d'immobilisation (16, 18, 20, 22, 16', 18', 20', 22') remplissent avec une pression de remplissage prédéfinie.

19. Dispositif selon l'une quelconque des revendications précédentes, **caractérisé en ce qu'**à l'élément d'immobilisation (16) ou à au moins un des éléments d'immobilisation (16, 18, 20, 22, 16', 18', 20', 22') sont associés des moyens de surveillance destinés à contrôler la pression de remplissage de l'élément d'immobilisation (16, 18, 20, 22, 16', 18', 20', 22') respectif.

20. Dispositif selon l'une quelconque des revendications précédentes, **caractérisé en ce qu'**à l'élément d'immobilisation (16) ou à au moins un des éléments d'immobilisation (16, 18, 20, 22, 16', 18', 20', 22') sont associés des moyens de commande pour la commande et/ou le réglage de la pression de remplissage de l'élément d'immobilisation (16, 18, 20, 22, 16', 18', 20', 22') respectif.

21. Dispositif selon l'une quelconque des revendications précédentes, **caractérisé par** des moyens de signalisation destinés à signaler la pression de remplissage, en particulier une pression inférieure à une pression de remplissage minimale prédéfinie, d'au moins un élément d'immobilisation (16).

22. Dispositif selon l'une quelconque des revendications précédentes, **caractérisé en ce qu'**à la plate-forme de chargement (10) est associé au moins un transporteur continu, destiné à transporter le chargement sur la plate-forme de chargement (10) et transportant dans la direction longitudinale de la plate-forme de chargement.

23. Dispositif selon la revendication 22, **caractérisé en ce que** la plate-forme de chargement (10) est formée au moins en partie par le transporteur continu.

24. Dispositif selon la revendication 22 ou 23, **caractérisé en ce que** le transporteur continu comporte au moins une bande transporteuse (106).

25. Dispositif selon la revendication 24, **caractérisé en ce qu'**à la bande transporteuse (106) est associé au moins un dispositif d'enroulement destiné à enrouler la bande transporteuse (106).

26. Dispositif selon la revendication 25, **caractérisé en ce que** le dispositif d'enroulement comporte un tambour d'enroulement (112) actionnable en rotation.

27. Dispositif selon l'une quelconque des revendications 24 à 26, **caractérisé en ce qu'**à la bande transporteuse (106) est associé au moins un dispositif de déroulement (94).

28. Dispositif selon la revendication 27, **caractérisé en ce que** le dispositif de déroulement comporte un élément d'entraînement, qui est mobile dans la direction longitudinale de la plate-forme de chargement (10) et qui est relié à une extrémité de la bande transporteuse (106) pour le déroulement de celle-ci.

29. Dispositif selon la revendication 28, **caractérisé en ce que** le dispositif de déroulement (94) comporte un palan à câble ou chaîne, dont le câble (98) ou la chaîne forme l'élément d'entraînement.

30. Dispositif selon l'une quelconque des revendications précédentes, **caractérisé en ce que** l'élément de séparation peut être verrouillé dans sa position déplacée respective au moyen d'un dispositif de verrouillage (52).

31. Dispositif selon la revendication 30, **caractérisé en ce que** le dispositif de verrouillage (52) est réalisé sous la forme d'un dispositif de verrouillage électromécanique.

32. Dispositif selon l'une quelconque des revendications précédentes, **caractérisé en ce que** l'élément de séparation est couplé, sur le plan de la technique d'entraînement, au transporteur continu, de telle sorte que l'élément de séparation se déplace sensiblement de manière synchrone par rapport à un mouvement de transport du transporteur continu.

33. Dispositif selon la revendication 32, **caractérisé en ce que** l'élément de séparation est fixé contre une partie mobile du transporteur continu.

34. Dispositif selon l'une quelconque des revendications précédentes, **caractérisé en ce qu'**à l'élément de séparation est associé au moins un élément d'immobilisation, en particulier est disposé sur celui-ci.

35. Véhicule de transport pour le transport d'un chargement sur une plate-forme de chargement, **caractérisé en ce qu'**il comporte un dispositif (8) selon l'une quelconque des revendications précédentes.
